(19) Europäisches Patentamt
European Patent Office
Office européen des brevets

(11) **EP 2 906 990 B1**

(12) **FASCICULE DE BREVET EUROPEEN**

(45) Date de publication et mention de la délivrance du brevet:
**06.03.2019 Bulletin 2019/10**

(21) Numéro de dépôt: **13786701.6**

(22) Date de dépôt: **10.10.2013**

(51) Int Cl.:
**G02C 7/10** *(2006.01)*   **G02B 5/28** *(2006.01)*
**G02B 5/23** *(2006.01)*

(86) Numéro de dépôt international:
**PCT/FR2013/052426**

(87) Numéro de publication internationale:
**WO 2014/057226 (17.04.2014 Gazette 2014/16)**

(54) **LENTILLE OPHTALMIQUE PHOTOCHROMIQUE**

FOTOCHROMES BRILLENGLAS

PHOTOCHROMIC OPHTHALMIC LENS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.10.2012 FR 1259714**

(43) Date de publication de la demande:
**19.08.2015 Bulletin 2015/34**

(73) Titulaire: **Essilor International**
**94220 Charenton-le-Pont (FR)**

(72) Inventeurs:
• **KUDLA, Amélie**
**F-94220 Charenton Le Pont (FR)**
• **MAURY, Hélène**
**F-94220 Charention Le Pont (FR)**

(74) Mandataire: **Jacobacci Coralis Harle**
**32, rue de l'Arcade**
**75008 Paris (FR)**

(56) Documents cités:
**WO-A1-2010/111499    WO-A1-2010/111499**
**WO-A2-2008/024414    US-A1- 2004 233 524**
**US-A1- 2011 075 096    US-A1- 2011 075 096**

**Description**

L'invention concerne le domaine de l'optique ophtalmique.

Elle concerne plus particulièrement une lentille ophtalmique comportant un substrat photochromique et dont la face principale avant comporte un filtre optique destiné à réduire les effets de la phototoxicité de la lumière bleue sur la rétine d'un porteur de lunettes sans dégrader les performances photochromiques de la lentille ophtalmique.

Dans l'ensemble de la présente demande de brevet, il sera fait référence à des gammes de valeurs, en particulier de longueurs d'onde et d'angles d'incidence. L'expression « compris entre les valeurs *x* et *y* » signifie « dans la gamme de *x* à *y* », les bornes *x* et *y* étant incluses dans cette gamme.

La lumière visible par l'oeil humain s'étend sur un spectre lumineux allant d'une longueur d'onde de 380 nanomètres (nm) à 780 nm environ. La partie de ce spectre, située entre 380 nm et 500 nm environ, correspond à une lumière sensiblement bleue, de haute énergie.

De nombreuses études (voir par exemple Kitchel E., « The effects of blue light on ocular health », Journal of Visual Impairment and Blindness Vol. 94, No. 6, 2000 ou Glazer-Hockstein et al., Retina Vol. 26 No. 1, pp. 1-4, 2006) suggèrent que la lumière bleue a des effets photo-toxiques sur l'oeil, et notamment sur la rétine.

En effet, des études de photobiologie oculaire (Algvere P.V. et al., « Age-Related Maculopathy and the Impact of the Blue Light Hazard », Acta Ophthalmo. Scand., Vol. 84, pp. 4-15, 2006) et des études cliniques (Tomany S.C. et al., « Sunlight and the 10-Year Incidence of Age-Related Maculopathy. The Beaver Dam Eye Study », Arch Ophthalmol., Vol. 122, pp. 750-757, 2004) ont montré qu'une exposition à la lumière bleue trop longue ou trop intense peut induire des pathologies ophtalmiques sévères telles que la dégénérescence maculaire liée à l'âge (DMLA).

Ainsi, il est recommandé de limiter l'exposition à la lumière bleue potentiellement nocive, en particulier pour la bande de longueur d'onde qui présente une dangerosité accrue (voir notamment tableau B1 de la norme ISO 8980-3 :2003 (E) concernant la fonction de dangerosité de la lumière bleue B($\lambda$)).

Néanmoins, une partie de cette lumière bleue, comprise entre 465 nm et 495 nm environ, est bénéfique dans la mesure où elle intervient au niveau des mécanismes de régulation des rythmes biologiques, appelés cycles circadiens.

Nous qualifierons par la suite cette lumière bleue comprise entre 465 nm et 495 nm de *« chronobiologique »*.

À cet effet, il peut être conseillé de porter devant chacun des yeux une lentille ophtalmique qui empêche ou limite la transmission de la lumière bleue phototoxique jusqu'à la rétine.

Il a déjà été proposé, par exemple dans la demande de brevet WO2008024414, de couper au moins partiellement, la partie gênante du spectre de la lumière bleue de 400 nm à 460 nm au moyen de lentilles comprenant un film inhibant partiellement la lumière dans la gamme de longueurs d'onde souhaitée, par absorption ou par réflexion.

Par ailleurs, l'homme du métier est à la recherche de filtres permettant de minimiser la quantité de lumière bleue nocive reçue par la rétine, tout en permettant de transmettre efficacement la lumière visible pour les longueurs d'onde supérieures à 465 nm afin, d'une part, de conserver une bonne vision pour le porteur et, d'autre part, de ne pas altérer les cycles circadiens.

De plus, il est également connu que la lumière ultraviolette (UV) s'étendant en deçà de 380 nm est extrêmement nocive pour l'oeil humain.

Il est connu d'utiliser des lentilles ophtalmiques photochromiques de teinte variable selon l'intensité lumineuse ambiante. Les composés photochromiques organiques utilisés dans de telles lentilles sont généralement des composés dont la coloration est activée sous l'effet de la lumière UV A, s'étendant sur un spectre lumineux allant d'une longueur d'onde de 330 nm à 380 nm environ.

Un tel substrat photochromique s'assombrit lorsqu'il est irradié par une lumière dans cette gamme de longueurs d'onde, ce qui en réduit la transmission lumineuse dans le domaine de la lumière visible.

Le substrat photochromique s'éclaircit progressivement lorsque l'irradiation du substrat par la lumière UVA diminue ou cesse.

La réalisation d'une lentille ophtalmique photochromique telle que divulguée dans les demandes de brevet US20110075096A1 ou WO2010111499A1, filtrant la lumière bleue, sans affecter significativement les cycles chronobiologiques pose un certain nombre de difficultés.

Une difficulté principale est que les gammes de longueurs d'onde de 420 nm à 450 nm qu'il convient de filtrer sont proches des gammes de longueurs d'onde allant de 330 nm à 380 nm et de 465 nm à 495 nm, qui ne doivent pas, ou très peu, être filtrées.

D'une manière générale, il est possible de concevoir des filtres étroits sélectifs, présentant une bande passante limitée et un pic de réflectivité centré sur cette bande passante. Pour limiter la transmission de la lumière bleue photo-toxique à la rétine, un filtre étroit adéquat devrait ainsi avoir par exemple une largeur à mi-hauteur de 30 nm entre 420 nm et 450 nm, et un maximum de réflectivité pour la longueur d'onde centrale de 435 nm.

En pratique, des filtres étroits très sélectifs sont généralement constitués d'un empilement comportant un nombre important de couches diélectriques et dont l'épaisseur totale est élevée et/ou présente au moins une couche d'épaisseur élevée (voir, par exemple, la demande de brevet US20040233524A1).

De tels filtres sont longs et coûteux à réaliser industriellement, en particulier lorsque ceux-ci sont déposés sous vide. La multiplication du nombre de couches, l'épaisseur totale du filtre et la multiplication des interfaces rendent également difficile d'atteindre de bonnes propriétés mécaniques.

Par ailleurs, comme déjà mentionné précédemment, des filtres par réflexion étroits comportant un nombre restreint de couches et une épaisseur totale compatible avec une fabrication industrielle à grande échelle ne présentent qu'une sélectivité spectrale réduite, et sont susceptibles de réfléchir une partie significative de la lumière dans la gamme régissant les cycles circadiens.

C'est donc un objectif de l'invention de fournir une lentille ophtalmique comportant un substrat photochromique et comprenant un filtre par réflexion tenant compte de l'ensemble de l'irradiation lumineuse provenant du milieu environnant et réduisant la lumière bleue phototoxique reçue par l'oeil dans la gamme de longueurs d'onde allant de 420 nm à 450 nm sans affecter substantiellement la fonction photochromique de la lentille et de garantir une excellente transmission dans la gamme de longueurs d'onde allant de 465 nm à 495 nm.

Ainsi, de préférence, l'utilisation du filtre selon l'invention, lorsqu'il est utilisé à la place d'un filtre antireflet classique (par exemple un filtre antireflet formé d'un empilement comme $ZrO_2$ (29 nm) / $SiO_2$ (22 nm) / $ZrO_2$ (68 nm) / ITO (7 nm) / $SiO_2$ (85 nm), déposé dans cet ordre sur un substrat Orma® Transitions® VI Gris comportant un revêtement antiabrasion tel que défini dans l'exemple 3 du brevet EP614957), n'entraîne pas une chute (en valeur absolue) de la transmission visuelle d'une valeur de 5% ou plus, mieux pas plus de 3% ou plus, par rapport à ce filtre classique.

Un autre objectif de l'invention est de fournir une lentille ophtalmique comportant un filtre par réflexion présentant des performances antireflet analogues ou proches de celles d'un filtre antireflet classique.

Un autre objectif de l'invention est de fournir une lentille ophtalmique comportant un filtre par réflexion présentant les propriétés ci-dessus, qui soit facile et peu coûteux à mettre en oeuvre industriellement.

Afin de répondre aux objectifs de l'invention et de remédier aux inconvénients précités de l'état de la technique, la présente invention propose une lentille ophtalmique photochromique munie d'un filtre par réflexion permettant de réduire la quantité de la lumière bleue phototoxique arrivant sur la rétine d'un porteur de cette lentille ophtalmique, tout en préservant au mieux les cycles circadiens et sans nuire à la fonction photochromique de la lentille ophtalmique.

À cet effet, l'invention concerne une lentille ophtalmique photochromique présentant une face principale avant et une face principale arrière, et comportant un substrat photochromique et un filtre comprenant une ou plusieurs couches formées sur ladite face principale avant de la lentille ophtalmique.

Selon l'invention, ledit filtre présente une épaisseur totale inférieure ou égale à 700 nm et confère à ladite face principale avant de la lentille ophtalmique photochromique les propriétés suivantes :

- un facteur moyen de réflexion dans l'UVA ($R_{m,UVA}$) sur une gamme de longueurs d'onde allant de 330 nanomètres à 380 nanomètres qui est inférieur ou égal à 40%, de préférence inférieur ou égal à 35 %, pour un angle d'incidence compris entre 0° et 15°,
- un facteur moyen de réflexion dans le bleu ($R_{m,B}$) sur une gamme de longueurs d'onde allant de 420 nanomètres à 450 nanomètres qui est supérieur ou égal à 5%, pour un angle d'incidence compris entre 0° et 15°,
- une courbe de réflectivité spectrale pour un angle d'incidence compris entre 0° et 15°, cette courbe de réflectivité ayant :

  - un maximum de réflectivité à une longueur d'onde inférieure à 435 nanomètres, et
  - une largeur à mi-hauteur (FWHM) supérieure ou égale à 70 nanomètres, et

- pour un angle d'incidence compris entre 0° et 15°, un paramètre $\Delta_{spectral}$ défini par la relation $\Delta_{spectral} = 1 - [R_{0°-15°}(480 \text{ nm}) / R_{0°-15°}(435 \text{ nm})]$, tel que ce paramètre $\Delta_{spectral}$ soit supérieur ou égal à 0,8, où

  - $R_{0°-15°}(480 \text{ nm})$ représente la valeur de la réflectivité de la face principale avant à la longueur d'onde de 480 nanomètres à l'incidence considérée, et
  - $R_{0°-15°}(435 \text{ nm})$ représente la valeur de la réflectivité de la face principale avant à la longueur d'onde de 435 nanomètres à l'incidence considérée.

Ainsi, la lentille ophtalmique photochromique selon l'invention permet de réduire la transmission de la lumière bleue phototoxique à la rétine d'un porteur de cette lentille ophtalmique, grâce à sa réflectivité moyenne sur une gamme de longueurs d'onde allant de 420 nm à 450 nanomètres, tout en permettant l'activation efficace par la lumière UVA du substrat photochromique grâce à sa réflectivité moyenne sur une gamme de longueurs d'onde allant de 330 nm à 380 nanomètres qui est limitée.

Les caractéristiques spectrales (réflectivité, $R_m$, $R_v$,..) de chaque face principale d'une lentille ophtalmique photochromique selon l'invention sont déterminées de façon classique pour un faisceau lumineux incident arrivant sur la face principale depuis l'air, sans avoir traversé le substrat.

Selon l'invention, lorsque les caractéristiques spectrales $R_{m,UVA}$, $R_{m,B}$, maximum de réflectivité, largeur à mi-hauteur et $\Delta_{spectral}$, sont définies pour un angle d'incidence sur la face principale avant compris entre 0° et 15°, celles-ci sont préférentiellement définies pour un angle d'incidence sur la face principale avant égal à 15°.

Par ailleurs, la lentille ophtalmique photochromique selon l'invention présentant sur sa face principale avant un filtre dont le paramètre $\Delta_{spectral}$ est tel que défini ci-dessus permet :

- de maximiser la réflexion de la lumière bleue phototoxique, l'intensité de cette réflexion étant liée à la grandeur $R_{0°-15°}(435\ nm)$, et
- de minimiser la réflexion de la lumière bleue chronobiologique comprise entre 465 nm et 495 nm, l'intensité de cette réflexion étant liée à la grandeur $R_{0°-15°}(480\ nm)$.

Le filtre proposé, conférant à la face principale avant une courbe de réflectivité spectrale ayant une largeur à mi-hauteur supérieure à 70nm, plus importante que celle d'un filtre étroit, présente une épaisseur totale inférieure ou égale à 700 nm.

Par conséquent, une lentille ophtalmique photochromique munie d'un tel filtre est de fabrication industrielle moins complexe et moins coûteuse.

Enfin, ce filtre est décentré par rapport à la bande de longueurs d'onde de la lumière bleue phototoxique comprise entre 420 nanomètres et 450 nanomètres.

En effet, la lentille ophtalmique photochromique présente un maximum de réflectivité à une longueur d'onde inférieure à 435 nanomètres.

Ceci permet d'avoir un filtre large peu épais et très efficace pour la lumière bleue phototoxique sans pour autant dégrader les performances de la lentille ophtalmique photochromique pour la lumière UVA et pour la lumière chronobiologique comprise entre 465 nm et 495nm.

Par ailleurs, d'autres caractéristiques avantageuses et non limitatives de la lentille ophtalmique photochromique selon l'invention sont les suivantes :

- le facteur moyen de réflexion dans l'UVA ($R_{m,UVA}$) est inférieur ou égale à 30 %, mieux inférieur ou égal à 25 %, et mieux encore inférieur ou égal à 15 %.
- le substrat photochromique comprend un substrat transparent revêtu d'un ou plusieurs composés photochromiques ;
- le substrat photochromique comprend un substrat transparent dans lequel sont incorporés un ou plusieurs composés photochromiques ;
- le filtre présente une épaisseur totale inférieure ou égale à 600 nanomètres, de préférence inférieure ou égale à 500 nanomètres ;
- le facteur moyen de réflexion dans l'UVA ($R_{m,UVA}$) est supérieur ou égal à 5 %, mieux supérieur ou égal à 10%, et mieux encore supérieur ou égal à 12%. Ainsi, le facteur moyen de réflexion dans l'UVA ($R_{m,UVA}$) est généralement compris entre 5 % et 40%, mieux inférieur ou égal à 35% nm, de préférence entre 10 % et 30 %, mieux entre 10 % et 25 % et mieux encore entre 10 % et 18 % ;
- le filtre est un filtre interférentiel ;
- le filtre comporte un nombre de couches inférieur ou égal à onze, préférentiellement de deux à dix couches, et encore plus préférentiellement de quatre à neuf couches ;
- chaque couche du filtre présente une épaisseur individuelle inférieure ou égale à 200 nanomètres ;
- le facteur moyen de réflexion dans le bleu ($R_{m,B}$) est supérieur ou égal à 10 %, mieux supérieur ou égal à 20 %, et mieux encore supérieur ou égal à 30 % ;
- le maximum de réflectivité est à une longueur d'onde inférieure ou égale à 410 nm, mieux inférieure ou égale à 400 nm, et encore mieux inférieure ou égale à 390 nm.
- la largeur à mi-hauteur (FWHM) est supérieure ou égale à 75 nanomètres, mieux supérieure ou égale à 80 nanomètres.
- la largeur à mi-hauteur est inférieure ou égale à 150 nanomètres, de préférence inférieure ou égale à 120 nanomètres, mieux inférieure ou égale à 110 nm.

Ainsi, la largeur à mi-hauteur est généralement comprise entre 70 nm et 150 nm, de préférence entre 75 nm et 120 nm, mieux entre 75 nm et 100 nm et mieux encore entre 75 et 90 nm.

Enfin, d'autres caractéristiques avantageuses et non limitatives de la lentille ophtalmique selon l'invention sont les suivantes :

- le facteur moyen de réflexion lumineux ($R_v$) sur la face principale avant est inférieur ou égal à 2,5%, mieux inférieur ou égal à 1,5%, et mieux encore inférieur ou égal à 1%.
- le facteur moyen de réflexion lumineux ($R_v$) sur chacune des faces principales de la lentille ophtalmique est inférieur ou égal à 2,5%, et préférentiellement inférieur ou égal à 1,5% ;

- la face principale arrière de la lentille ophtalmique comporte un revêtement anti-UV, c'est-à-dire réfléchissant peu les UV, préférentiellement un revêtement antireflet efficace dans les UV et dans le visible ;
- la valeur de la réflectivité au maximum de réflectivité de la face principale avant, pour un angle d'incidence de 15°, est de préférence au moins 1,2 fois supérieure, mieux au moins 1,5 fois supérieure et de façon optimale au moins 1,7 fois supérieure à la valeur de la réflectivité de la face principale avant, pour le même angle d'incidence, et à la longueur d'onde de 435 nm.
- le filtre confère à la face principale avant la propriété supplémentaire suivante :

  - pour un angle d'incidence $\theta$ compris entre 0° et 15° et pour un angle d'incidence $\theta'$ compris entre 30° et 45°, un paramètre $\Delta_{angulaire}$ défini par la relation $\Delta_{angulaire} = 1 - [R_{\theta'}(435 \text{ nm}) / R_{\theta}(435 \text{ nm})]$, tel que ce paramètre $\Delta_{angulaire}$ soit supérieur ou égal à 0,6, où :

    - $R_{\theta}(435 \text{ nm})$ représente la valeur de la réflectivité de la face principale comportant ledit filtre à la longueur d'onde de 435 nanomètres pour l'angle d'incidence $\theta$, et
    - $R_{\theta'}(435 \text{ nm})$ représente la valeur de la réflectivité de la face principale comportant ledit filtre à la longueur d'onde de 435 nanomètres pour l'angle d'incidence $\theta'$.

- le paramètre $\Delta_{angulaire}(\theta,\theta')$ est de préférence défini pour un angle d'incidence $\theta$ égal à 15° et pour un angle d'incidence $\theta'$ égale à 45° ;
- ledit filtre confère à ladite face principale avant la propriété supplémentaire suivante :

  - un facteur moyen de réflexion entre 400 nanomètres et 450 nanomètres ($R_{m,400nm-450nm}$) sur une gamme de longueurs d'onde allant de 400 nanomètres à 450 nanomètres qui est inférieur ou égal à 35 %, pour un angle d'incidence compris entre 0° et 15°.

De préférence, le facteur moyen de réflexion entre 400 nanomètres et 450 nanomètres ($R_{m,400nm-450nm}$) est défini pour un angle d'incidence sur la face principale avant égal à 15°.

Les filtres susceptibles d'être utilisés dans une lentille ophtalmique selon l'invention sont également particulièrement avantageux lorsqu'ils sont déposés sur au moins l'une des faces principales d'un substrat transparent non photochromique.

Ainsi, l'invention propose également un filtre formé d'une ou plusieurs couches caractérisé en ce ledit filtre présente une épaisseur inférieure ou égale à 700 nanomètres et en ce que ledit filtre, lorsqu'il est appliqué à l'une des faces principales d'un substrat transparent, confère à ladite face principale du substrat transparent les propriétés suivantes :

- un facteur moyen de réflexion dans l'UVA ($R_{m,UVA}$) sur une gamme de longueurs d'onde allant de 330 nanomètres à 380 nanomètres qui est inférieur à 31%, de préférence inférieur ou égal à 30 %, mieux inférieur ou égal à 25 %, pour un angle d'incidence compris entre 0° et 15°,
- un facteur moyen de réflexion dans le bleu ($R_{m,B}$) sur une gamme de longueurs d'onde allant de 420 nanomètres à 450 nanomètres qui est supérieur ou égal à 5 %, pour un angle d'incidence compris entre 0° et 15°,
- une courbe de réflectivité spectrale pour un angle d'incidence compris entre 0° et 15°, cette courbe de réflectivité ayant :

  - un maximum de réflectivité à une longueur d'onde inférieure à 435 nanomètres, et
  - une largeur à mi-hauteur (FWHM) supérieure ou égale à 70 nanomètres, et

- pour un angle d'incidence compris entre 0° et 15°, un paramètre $\Delta_{spectral}$ défini par la relation $\Delta_{spectral} = 1 - [R_{0°-15°}(480 \text{ nm}) / R_{0°-15°}(435 \text{ nm})]$, tel que ce paramètre $\Delta_{spectral}$ soit supérieur ou égal à 0,8, où
- $R_{0°-15°}(480 \text{ nm})$ représente la valeur de la réflectivité de la face principale avant à la longueur d'onde de 480 nanomètres à l'incidence considérée, et
- $R_{0°-15°}(435 \text{ nm})$ représente la valeur de la réflectivité de la face principale avant à la longueur d'onde de 435 nanomètres à l'incidence considérée.

Par ailleurs, d'autres caractéristiques avantageuses et non limitatives du filtre selon l'invention sont les suivantes :

- chaque couche dudit filtre présente une épaisseur individuelle inférieure ou égale à 200 nanomètres ;

- la largeur à mi-hauteur (FWHM) dudit filtre est supérieure ou égale à 76 nm et inférieure ou égale à 150 nm ;
- le facteur moyen de réflexion lumineux ($R_v$) sur la face principale dudit substrat transparent qui comprend le filtre est inférieur ou égal à 2,5%, mieux inférieur ou égal à 1,5%, et mieux encore inférieur ou égal à 0,7%.

En outre, la lentille ophtalmique photochromique selon l'invention entre avantageusement dans la réalisation de paire de lunettes.

Ainsi, l'invention propose également une paire de lunettes comportant au moins une lentille ophtalmique photochromique selon l'invention ou au moins un filtre selon l'invention.

Par ailleurs, l'utilisation d'une lentille ophtalmique photochromique selon l'invention ou d'un filtre selon l'invention s'avère particulièrement intéressante pour un usage thérapeutique ou pour prévenir les maladies liées à la phototoxicité de la lumière bleue.

L'invention propose l'utilisation d'une lentille ophtalmique photochromique selon l'invention pour accroître le contraste de vision d'un porteur.

L'invention propose enfin l'utilisation d'une lentille ophtalmique photochromique selon l'invention pour protéger de la phototoxicité de la lumière bleue au moins une partie de l'oeil d'un porteur, en particulier pour le protéger d'un processus dégénératif tel que la dégénérescence maculaire liée à l'âge (DMLA).

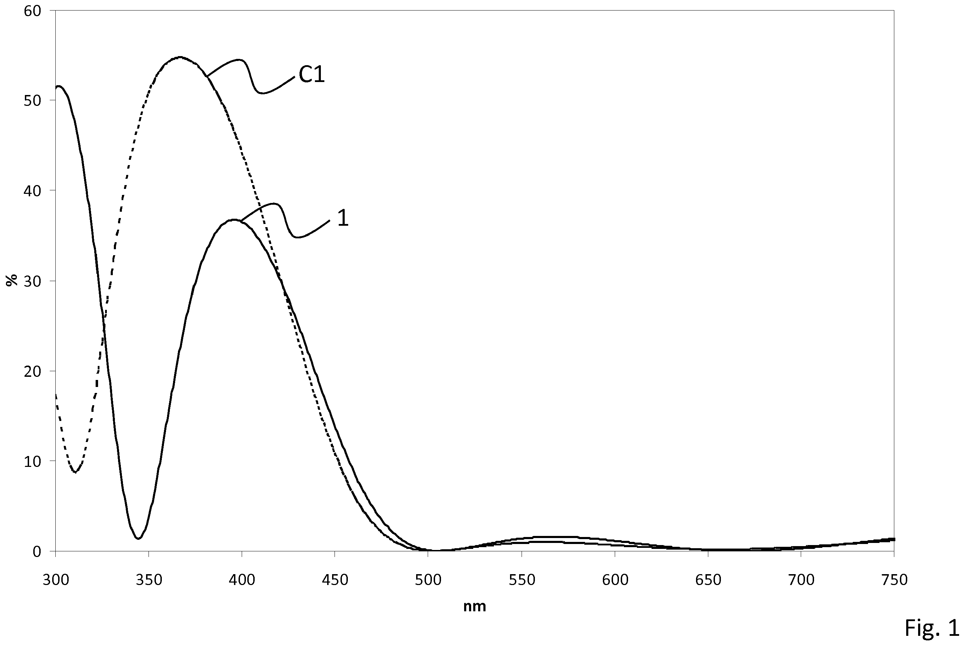

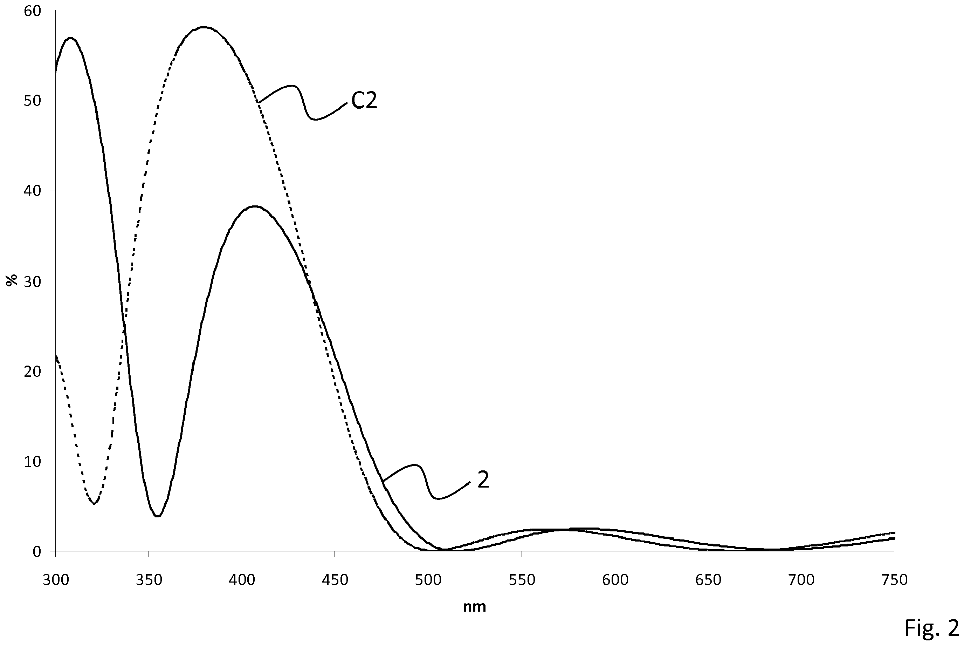

L'invention sera décrite plus en détail en référence aux dessins annexés, dans lesquels des lentilles ophtalmiques photochromiques présentent un filtre selon l'invention sur leur face principale avant. On a représenté sur les figures 1 et 2 les courbes de réflectivité spectrale pour un angle d'incidence sur la face principale avant de 15°, de certaines lentilles ophtalmiques photochromiques préparées dans les exemples 1 et 2 de la présente demande et de lentilles ophtalmiques photochromiques revêtues d'un filtre ne satisfaisant pas les caractéristiques des filtres de l'invention (voir exemples comparatifs C1 et C2).

En préambule, on rappellera qu'une lentille ophtalmique présente généralement une face principale avant et une face principale arrière.

On entendra ici que la face principale avant de la lentille ophtalmique est la face principale de la lentille ophtalmique qui est située le plus loin des yeux du porteur de lunettes. Il s'agit généralement d'une face convexe. Par opposition, on désignera par face principale arrière la face principale de la lentille ophtalmique qui, lors de l'utilisation de la lentille ophtalmique, est située le plus près des yeux du porteur la face principale arrière. Il s'agit généralement d'une face concave.

Comme cela est bien connu, la lentille ophtalmique photochromique selon l'invention comprend un substrat transparent en verre minéral ou organique, préférentiellement organique.

Le substrat de la lentille ophtalmique photochromique selon l'invention présente généralement une épaisseur au centre comprise entre 1 et 5 millimètres.

Le substrat de la lentille ophtalmique photochromique selon l'invention est de préférence en verre organique, par exemple une matière plastique thermoplastique ou thermodurcissable.

Parmi les matériaux thermoplastiques convenant pour les substrats, on peut citer les (co)polymères (méth)acryliques, en particulier le poly(méthacrylate de méthyle) (PMMA), les (co)polymères thio(méth)acryliques, le polyvinylbutyral (PVB), les polycarbonates (PC), les polyuréthanes (PU), les polythiouréthanes, les (co)polymères d'allylcarbonates de polyols, les copolymères thermoplastiques éthylène/acétate de vinyle, les polyesters tels que le poly(téréphtalate d'éthylène) (PET) ou le poly(téréphtalate de butylène) (PBT), les polyépisulfures, les polyépoxydes, les copolymères polycarbonates/polyesters, les copolymères de cyclo-oléfines tels que les copolymères éthylène/norbornène ou éthylène/cyclopentadiène et leurs combinaisons.

Par (co)polymère, on entend un copolymère ou un homopolymère. Par (méth)acrylate, on entend un acrylate ou un méthacrylate. Par polycarbonate (PC), on entend au sens de la présente invention aussi bien les homopolycarbonates que les copolycarbonates et les copolycarbonates séquencés.

Les substrats particulièrement recommandés sont les substrats obtenus par (co)polymérisation du bis allyl carbonate du diéthylèneglycol, vendu, par exemple, sous la dénomination commerciale CR-39® par la société PPG Industries (lentilles ORMA® ESSILOR), ou des polymères polythiouréthanes. Les substrats peuvent être obtenus par polymérisation de mélanges des monomères ci-dessus, ou peuvent encore comprendre des mélanges de ces polymères et (co)polymères.

D'autres substrats préférés sont les polycarbonates.

Le substrat peut comprendre un ou plusieurs revêtements fonctionnels pour conférer à la lentille ophtalmique des propriétés optiques et/ou mécaniques particulières, tels que, par exemple, un revêtement anti-choc, un revêtement anti-abrasion, un revêtement anti-reflet, un revêtement anti-UV, un revêtement anti-statique, un revêtement polarisant, et un revêtement anti-salissure et/ou anti-buée. Tous ces revêtements sont bien connus dans la technique des lentilles ophtalmiques.

Le substrat de la lentille ophtalmique selon l'invention est en particulier un substrat photochromique.

On entendra par là que le substrat de la lentille ophtalmique photochromique selon l'invention comporte un ou plusieurs composés photochromiques dispersés au sein du volume du substrat ou un revêtement fonctionnel déposé sur l'une des surfaces du substrat, ce revêtement comprenant des composés photochromiques.

Les composés photochromiques selon l'invention sont des composés photochromiques activables sous l'effet d'une irradiation UV, en particulier une irradiation UVA.

Les composés photochromiques selon l'invention sont de préférence des composés photochromiques organiques.

Des exemples de tels composés photochromiques sont par exemple décrits dans les documents EP1268567 et EP1161512.

De manière générale, une lentille ophtalmique photochromique possède :

- un état non excité, ou état « clair », dans lequel la lentille ophtalmique photochromique présente une transmission visuelle maximale $T_{v,max}$, exprimée en % et définie selon la norme ISO 8980-3, et
- un état excité, ou état « sombre », dans lequel la lentille ophtalmique photochromique présente une transmission visuelle minimale $T_{v,min}$.

La chute de transmission visuelle $\Delta T_v$ entre l'état non excité et l'état excité, c'est-à-dire la différence de transmission visuelle $T_{v,max} - T_{v,min}$ entre la transmission visuelle maximale $T_{v,max}$ et la transmission visuelle minimale $T_{v,min}$, provient de l'activation des composés photochromiques par la lumière incidente sur la lentille ophtalmique photochromique, cette lumière incidente comprenant notamment des radiations ultraviolettes et visibles.

On notera $\Delta T_{v,400nm-450nm}$ la contribution à la chute de transmission visuelle $\Delta T_v$ due à l'irradiation lumineuse dans le domaine visible, pour des longueurs d'onde comprise entre 400 nm et 450 nm.

L'invention peut être mise en oeuvre avantageusement avec des composés photochromiques organiques pouvant être partiellement activés sous l'effet d'une irradiation lumineuse dans le domaine visible.

L'invention s'applique en particulier au cas des composés photochromiques pour lesquels la contribution $\Delta T_{v,400nm-450nm}$ à la chute de transmission visuelle $\Delta T_v$ est au moins égale à 20% (c'est-à-dire $\Delta T_{v,400nm-450nm} / \Delta T_v \geq 0,2$), mieux supérieure ou égale à 30% ($\Delta T_{v,400nm-450nm} / \Delta T_v \geq 0,3$), de cette chute de transmission visuelle $\Delta T_v$.

Un substrat photochromique dans lequel des composés photochromiques sont dispersés au sein du volume du substrat peut être obtenu selon deux procédés différents bien connus de l'homme du métier :

- un procédé de transfert thermique qui consiste, dans une première étape, à recouvrir au moins l'une des surfaces du substrat d'un film mince contenant des composants photochromiques. Lors d'une deuxième étape, dite de sublimation, l'ensemble du substrat et du film est chauffé de sorte que les composés photochromiques contenus dans le film migrent à l'intérieur du substrat. Un tel procédé est notamment décrit dans les documents US4286957 et US4880667. À l'issue de la deuxième étape, les composés photochromiques sont alors présents dans un volume situé juste en dessous de la surface du substrat sur laquelle le film a été déposé. Les composés photochromiques sont typiquement alors présents dans le substrat sur une profondeur allant de 10 à 150 microns.
- un procédé dit *« cast-in-place »* qui consiste à incorporer les composés photochromiques dans la matière première servant à produire une ébauche du substrat. Dans le cas d'un substrat en verre organique, ce procédé revient à incorporer et à mélanger les composés photochromiques dans le matériau organique polymère avant l'étape de moulage et l'étape de polymérisation du matériau organique.

Une autre technique consiste à déposer un revêtement photochromique sur l'une des surfaces du substrat, ce revêtement apportant à ce substrat ses propriétés photochromiques. Le dépôt du revêtement s'effectue de préférence par *spin-coating*. Les composés photochromiques utilisés peuvent être choisis par exemple dans la famille des spiro-oxazines ou bien dans la famille des chromènes (voir par exemple les spiro-oxazines et les chromènes cités dans les brevets EP1268567 et EP1161512 précédemment cités).

Comme indiqué précédemment, le substrat photochromique de la lentille ophtalmique peut comporter différents revêtements soit sur la face principale avant de la lentille ophtalmique, soit sur la face principale arrière de la lentille ophtalmique.

Un revêtement qui est "sur" le substrat photochromique ou qui a été déposé "sur" le substrat photochromique est défini comme un revêtement qui :

(i) est positionné au-dessus d'une surface du substrat photochromique,
(ii) n'est pas nécessairement en contact avec le substrat photochromique, c'est-à-dire qu'un ou plusieurs revêtements intermédiaires peuvent être disposés entre le substrat photochromique et le revêtement en question, et
(iii) ne recouvre pas nécessairement complètement la surface du substrat photochromique.

Lorsque "une couche A est localisée sous une couche B", on comprendra que la couche B est plus éloignée du substrat que la couche A.

Dans un mode de réalisation, le substrat photochromique comprend un substrat transparent revêtu de composés photochromiques qui sont déposés sur la surface avant du substrat au moyen d'un vernis.

Dans un mode de réalisation préféré, le revêtement fonctionnel photochromique est en contact direct avec la surface avant du substrat transparent.

Selon l'invention, la face principale avant de la lentille ophtalmique comporte un filtre.

Dans un autre mode préféré, le filtre est déposé directement sur un revêtement anti-abrasion et/ou anti-rayures ayant lui-même été déposé sur le revêtement photochromique de la lentille ophtalmique.

Avant le dépôt du filtre, il est courant de soumettre la surface dudit substrat, à un traitement d'activation physique ou chimique, destiné à augmenter l'adhésion du filtre sur la ou les faces principales.

Ce prétraitement est généralement conduit sous vide. Il peut s'agir d'un bombardement avec des espèces énergétiques, par exemple un faisceau d'ions (*« Ion Pre-Cleaning »* ou "IPC") ou un faisceau d'électrons, d'un traitement par décharge corona, par effluvage, d'un traitement UV, ou d'un traitement par plasma sous vide, généralement un plasma d'oxygène ou d'argon. Il peut également s'agir d'un traitement de surface acide ou basique et/ou par solvants (eau ou solvant organique).

Selon l'invention, le filtre comprend une ou plusieurs couches et présente une épaisseur totale inférieure ou égale à 700 nanomètres.

La limitation de l'épaisseur totale du filtre permet, d'une part, d'assurer de bonnes propriétés mécaniques du filtre comme par exemple son adhésion au substrat photochromique ou sa résistance thermique. Elle permet, d'autre part, de limiter les coûts de fabrication d'un tel filtre, son dépôt sur une lentille ophtalmique étant généralement d'autant plus long que son épaisseur est importante.

Dans un mode de réalisation préféré, le filtre présente une épaisseur totale inférieure ou égale à 600 nanomètres, mieux inférieure ou égale à 500 nm.

L'épaisseur totale du filtre est généralement supérieure à 200 nm, de préférence supérieure à 250 nm.

Dans la présente demande, la réflectivité spectrale de la lentille ophtalmique, pour un angle d'incidence donné de la face principale avant, représente la variation de la réflectivité (*i.e.* du facteur de réflexion) à cet angle d'incidence en fonction de la longueur d'onde. La courbe de réflectivité spectrale correspond à une représentation graphique de la réflectivité spectrale dans laquelle on trace la réflectivité spectrale (ordonnées) en fonction de la longueur d'onde (abscisses). Les courbes de réflectivité spectrales peuvent être mesurées au moyen d'un spectrophotomètre, par exemple un spectrophotomètre Perkin Elmer Lambda 850 équipé URA (Universal Reflectance Accessory).

Le facteur moyen de réflexion, noté $R_m$, est tel que défini dans la norme ISO 13666:1998, et mesuré conformément à la norme ISO 8980-4 (à un angle d'incidence inférieur à 17°, typiquement de 15°), c'est-à-dire qu'il s'agit de la moyenne (non pondérée) de la réflectivité spectrale sur l'ensemble du spectre lumineux allant de 400 nm à 700 nm.

De même, le facteur de réflexion lumineux, noté $R_v$, également appelé dans la présente demande facteur moyen de réflexion lumineux est tel que défini dans la norme ISO 13666:1998, et mesuré conformément à la norme ISO 8980-4 (à un angle d'incidence inférieur à 17°, typiquement de 15°), c'est-à-dire qu'il s'agit de la moyenne pondérée de la réflectivité spectrale sur l'ensemble du spectre lumineux visible compris entre 380 nm et 780 nm.

Par analogie, on définit un facteur moyen de réflexion dans l'UVA entre 330 nm et 380 nm, noté $R_{m,UVA}$, qui correspond à la moyenne (non pondérée) de la réflectivité spectrale sur la gamme de longueurs d'onde allant de 330 nm à 380 nm.

De la même manière, on définit un facteur moyen de réflexion dans le bleu entre 420 nm et 450 nm, noté $R_{m,B}$, qui correspond à la moyenne (non pondérée) de la réflectivité spectrale sur la gamme de longueurs d'onde allant de 420 nm à 450 nm.

On définit un facteur moyen de réflexion entre 400 nm et 450 nm, noté $R_{m,400nm-450nm}$, qui correspond à la moyenne (non pondérée) de la réflectivité spectrale sur la gamme de longueurs d'onde allant de 400 nm à 450 nm.

Selon l'invention, le facteur moyen de réflexion dans l'UVA $R_{m,UVA}$ et le facteur moyen de réflexion dans le bleu $R_{m,B}$ peuvent être mesurés pour un angle d'incidence sur la face principale avant compris entre 0° (incidence normale) et 15°, préférentiellement à 15°.

Dans la présente demande, on notera également :

- $R_{0°-15°}(480 \text{ nm})$ la valeur de la réflectivité de la face principale avant de la lentille ophtalmique à la longueur d'onde de 480 nanomètres pour un angle d'incidence sur cette face principale avant compris entre 0° et 15°, et
- $R_{0°-15°}(435 \text{ nm})$ la valeur de la réflectivité de la face principale avant de la lentille ophtalmique à la longueur d'onde de 435 nanomètres pour un angle d'incidence sur cette face principale avant compris entre 0° et 15°.

On définira alors un paramètre $\Delta_{spectral}$ par la relation suivante : $\Delta_{spectral} = 1 - [R_{0°-15°}(480 \text{ nm}) / R_{0°-15°}(435 \text{ nm})]$. On verra dans la suite de la description comment ce paramètre $\Delta_{spectral}$ permet de quantifier l'efficacité du filtre à rejeter la lumière bleue phototoxique et à transmettre la lumière bleue chronobiologique.

On notera également de la même manière :

- $R_\theta(435\ nm)$ la valeur de la réflectivité de la face principale de la lentille ophtalmique comportant le filtre selon l'invention, cette valeur étant déterminée (par mesure ou par calcul) à une longueur d'onde de 435 nanomètres et pour un angle d'incidence $\theta$ sur la face principale avant compris entre 0° et 15°, et
- $R_{\theta'}(435\ nm)$ la valeur de la réflectivité de la face principale de la lentille ophtalmique comportant le filtre selon l'invention, cette valeur étant déterminée (par mesure ou par calcul) à une longueur d'onde de 435 nanomètres et pour un angle d'incidence $\theta'$ sur la face principale avant compris entre 30° et 45°.

On définira alors un paramètre $\Delta(\theta,\theta')$ par la relation suivante : $\Delta(\theta,\theta') = 1 - [R_{\theta'}(435\ nm) / R_\theta(435\ nm)]$. On verra dans la suite de la description comment ce paramètre $\Delta(\theta,\theta')$ contribue à l'efficacité d'une lentille ophtalmique à limiter la quantité de lumière bleue phototoxique arrivant sur la rétine d'un porteur, en tenant compte des contributions respectives de la lumière bleue provenant du côté de la face avant ou du côté de la face arrière de la lentille.

Conformément à l'invention, le filtre confère à la face principale avant de la lentille ophtalmique la propriété de présenter, pour un angle d'incidence sur cette face principale compris entre 0° et 15°, un facteur moyen de réflexion dans l'UVA $R_{m,UVA}$ qui est inférieur ou égal à 40%, mieux inférieur ou égal à 35%.

Le filtre est ainsi conçu pour limiter le facteur moyen de réflexion dans l'UVA $R_{m,UVA}$. Ceci permet de minimiser la réjection de la lumière UVA, dans la gamme de longueurs d'onde allant de 330 nm à 380 nm, arrivant sur la face principale avant de la lentille. Ainsi, en permettant à la lumière UVA d'être transmise au substrat photochromique de la lentille ophtalmique, le filtre ne bloque pas l'activation des composés photochromiques déposés sur la surface avant du substrat photochromique. Les composés photochromiques ne sont pas inhibés et ils peuvent se colorer sous l'action de la lumière UVA comprise entre 330 nm et 380 nm de sorte que le substrat photochromique s'assombrit. Par ailleurs, la transmission, au travers de la lentille ophtalmique, de la lumière UVA (absorbée notamment par les composés photochromiques) jusqu'à la rétine d'un porteur est fortement réduite, le protégeant des effets nocifs de la lumière UVA.

Selon un mode de réalisation préféré de l'invention, le facteur moyen de réflexion dans l'UVA $R_{m,UVA}$, pour un angle d'incidence sur la face principale avant de la lentille ophtalmique compris entre 0° et 15°, de préférence 15°, est inférieur ou égal à 30%, mieux inférieur ou égal à 25%, et encore mieux inférieur ou égal à 20%, et de façon optimale inférieur ou égal à 15%.

Préférentiellement, la lentille ophtalmique selon l'invention est telle que le filtre confère à ladite face principale avant la propriété suivante :

- un facteur moyen de réflexion dans la gamme 400-450 nm ($R_{m,400\text{-}450}$) sur une gamme de longueurs d'onde allant de 400 à 450 nanomètres qui est inférieur ou égal à 35 %, pour un angle d'incidence compris entre 0° et 15°.

Cette caractéristique est particulièrement intéressante lorsque le composé photochromique présente une zone d'activation dans la gamme du visible.

De plus, conformément à l'invention, le filtre confère à la face principale avant de la lentille ophtalmique la propriété de présenter, pour un angle d'incidence sur cette face principale compris entre 0° et 15°, un facteur moyen de réflexion dans le bleu $R_{m,B}$ qui est supérieur ou égal à 5%.

Selon un mode de réalisation préféré de l'invention, le facteur moyen de réflexion dans le bleu $R_{m,B}$, pour un angle d'incidence sur la face principale avant de la lentille ophtalmique compris entre 0° et 15°, de préférence 15°, est supérieur ou égal à 10%, mieux supérieur ou égal à 20%, et encore mieux supérieur ou égal à 30%, et de façon optimale supérieur ou égal à 50%.

Conformément à l'invention, le filtre confère également à la face principale avant la propriété de présenter une courbe de réflectivité spectrale pour un angle d'incidence sur cette face principale avant compris entre 0° et 15°, de préférence 15°, qui a :

- un maximum de réflectivité à une longueur d'onde inférieure à 435 nanomètres, et
- une largeur à mi-hauteur (FWHM) supérieure ou égale à 70 nanomètres.

En effet, comme cela est visible sur les figures 1 et 2, les courbes de réflectivité spectrale de la face principale avant des lentilles ophtalmiques conformes à l'invention, présentent généralement, dans la gamme de longueurs d'onde allant de 380 nm à 500 nm, une forme de « cloche » que l'on peut caractériser par sa hauteur (maximum de réflectivité) et sa largeur à mi-hauteur (FWHM ou *« Full Width at Half Maximum »* en anglais).

Selon l'invention, le maximum de réflectivité est obtenu pour une longueur d'onde inférieure à 435 nm. Il est donc décalé par rapport à la longueur d'onde centrale (435 nm) de la bande de longueurs d'onde comprises entre 420 nm et 450 nm de la lumière bleue phototoxique.

De préférence, le maximum de réflectivité est à une longueur d'onde inférieure ou égale à 410 nm, mieux inférieure ou égale à 400 nm et encore mieux inférieure ou égale à 390 nm.

Dans un mode de réalisation préféré, ce décalage est limité de telle sorte que le maximum de réflectivité soit également à une longueur d'onde supérieure ou égale à 350 nm. De préférence, le maximum de réflectivité est à une longueur d'onde supérieure à 360 nm, mieux supérieure ou égale à 370 nm. De façon optimale, le maximum de réflectivité est à une longueur d'onde supérieure à 380 nm.

Selon l'invention, la largeur à mi-hauteur de la courbe de réflectivité spectrale considérée, pour un angle d'incidence sur la face principale avant compris entre 0° et 15° est supérieure ou égale à 70 nm.

Un filtre dimensionné de telle sorte que la courbe de réflectivité spectrale pour un angle d'incidence sur la sur la face principale comportant le filtre compris entre 0° et 15° ait une largeur à mi-hauteur (FWHM) supérieure ou égale à 70 nanomètres, sera désigné par la suite filtre large.

Dans un mode de réalisation préférée, la largeur à mi-hauteur est supérieure ou égale à 75 nm, de préférence supérieure ou égale à 80 nanomètres, et encore plus préférentiellement supérieure ou égale à 90 nm.

De préférence également, la largeur à mi-hauteur est inférieure à 150 nanomètres, mieux inférieure à 120 nanomètres, mieux encore inférieure à 110 nm.

Toujours selon l'invention, le filtre confère enfin à la face principale avant de la lentille ophtalmique la propriété de présenter un paramètre $\Delta_{spectral}$, tel que défini précédemment, supérieur ou égal à 0,8.

Tel que défini précédemment, le paramètre $\Delta_{spectral}$ dépend à la fois de la réflectivité à 435 nm pour un angle d'incidence sur la face principale avant compris entre 0° et 15°, notée $R_{0°-15°}(435\ nm)$ et à la fois de la réflectivité à 480 nm pour un angle d'incidence sur la face principale avant compris entre 0° et 15°, notée $R_{0°-15°}(480\ nm)$.

Dans le cas d'un lentille ophtalmique selon l'invention, placée devant l'oeil d'un porteur, on comprend que la quantité de lumière bleue phototoxique comprise dans la gamme de longueurs d'onde allant de 420 nm à 450 nm arrivant de manière directe sur la face principale avant de la lentille ophtalmique et parvenant à l'oeil du porteur varie dans le sens inverse de la grandeur $R_{0°-15°}(435\ nm)$.

De la même manière, la quantité de lumière bleu photo-stimulante comprise dans la gamme de longueurs d'onde allant de 465 nm à 495 nm arrivant de manière directe sur la face principale avant de la lentille ophtalmique et parvenant à l'oeil du porteur varie dans le sens inverse de la grandeur $R_{0°-15°}(480\ nm)$.

Ainsi, en choisissant un paramètre $\Delta_{spectral}$ tel que $\Delta_{spectral} \geq 0,8$, on obtient une lentille ophtalmique avec un filtre qui est non seulement efficace contre la lumière bleue photo-toxique, mais aussi performant pour la lumière bleue chronobiologique.

En effet, le paramètre $\Delta_{spectral}$ est d'autant plus élevé que :

(i) la valeur de la réflectivité $R_{0°-15°}(480\ nm)$ est faible, c'est-à-dire que la quantité de lumière bleue photo-stimulante incidente sur la face principale avant de la lentille ophtalmique et réfléchie par celle-ci est élevée est faible, et que

(ii) la valeur de la réflectivité $R_{0°-15°}(435\ nm)$ est élevée, c'est-à-dire que la quantité de lumière bleue phototoxique arrivant de manière directe sur la face principale avant de la lentille ophtalmique et réfléchie par celle-ci est élevée.

Dans un mode de réalisation préféré, le paramètre $\Delta_{spectral}$ de la lentille ophtalmique munie d'un filtre large selon l'invention est supérieur ou égal à 0,85, mieux supérieur ou égal à 0,90.

De préférence, le facteur moyen de transmission dans le bleu entre 465 nm et 495 nm de la lentille ophtalmique selon l'invention (pour un angle d'incidence sur la face principale avant compris entre 0° et 15°), qui correspond à la moyenne (non pondérée) de la transmitivité spectrale sur la gamme de longueurs d'onde allant de 465 nm à 495 nm, est supérieur ou égal à 80%, mieux supérieur ou égal à 85%, et encore mieux supérieur ou égal à 90%.

Ceci permet notamment de garantir que la majeure partie de la lumière bleue chronobiologique, comprise entre 465 nm et 495 nm, qui serait responsable de la synchronisation de l'horloge biologique, soit transmise à l'oeil d'un porteur équipé de cette lentille ophtalmique.

De manière préférée, le facteur de transmission de la lentille ophtalmique à 480 nm pour un angle d'incidence sur la face principale avant compris entre 0° et 15° est supérieur ou égal à 70%, mieux supérieur ou égal à 90%, et encore mieux supérieur ou égal à 94%.

Toujours selon l'invention, le filtre confère enfin à la face principale de la lentille ophtalmique comportant le filtre la propriété de présenter un paramètre $\Delta_{angulaire}$, tel que défini précédemment, supérieur ou égal à 0,6.

Tel que défini précédemment, le paramètre $\Delta_{angulaire}$ dépend à la fois de la réflectivité à 435 nm pour un angle d'incidence $\theta$ sur la face principale compris entre 0° et 15°, notée $R_{\theta}(435\ nm)$ et à la fois de la réflectivité à 435 nm pour un angle d'incidence $\theta'$ sur la face principale compris entre 30° et 45°, notée $R_{\theta'}(435\ nm)$.

On comprend qu'une lentille ophtalmique positionnée devant l'oeil d'un porteur reçoit, d'une part, de la lumière directe incidente sur sa face principale avant, et, d'autre part, de la lumière indirecte provenant de l'arrière du porteur et réfléchie par sa face principale arrière.

La lumière venant de l'arrière du porteur et réfléchie par la lentille ophtalmique en direction de l'oeil du porteur est principalement la lumière incidente sur la face principale arrière de la lentille ophtalmique avec des angles d'incidence compris entre 30° et 45°.

Cette lumière visible provenant de l'arrière du porteur à un angle d'incidence compris entre 30° et 45° traverse la face principale arrière, sur laquelle se produit une première réflexion, puis le substrat pour atteindre la face principale avant comportant le filtre.

Il est connu de l'homme du métier que les propriétés optiques du filtre déposé sur la face principale avant d'une lentille ophtalmique, par exemple la réflectivité, sont équivalentes, que la lumière soit incidente du côté de la face principale avant ou provenant du côté de la face principale arrière.

Ainsi, dans le cas d'une lentille ophtalmique selon l'invention, placée devant l'oeil d'un porteur, on comprend que la quantité de lumière bleue photo-toxique comprise dans la gamme de longueurs d'onde allant de 420 nm à 450 nm arrivant de manière directe sur la face principale avant de la lentille ophtalmique et parvenant à l'oeil du porteur varie dans le sens inverse de la grandeur $R_\theta(435\ nm)$.

De la même manière, la quantité de lumière bleue phototoxique comprise dans la gamme de longueurs d'onde allant de 420 nm à 450 nm arrivant indirectement de l'arrière du porteur et réfléchie par la lentille ophtalmique varie dans le même sens que la grandeur $R_{\theta'}(435\ nm)$.

Ainsi, en choisissant un paramètre $\Delta_{angulaire}$ tel que $\Delta_{angulaire} \geq 0,6$, on obtient une lentille ophtalmique avec un filtre efficace et optimisé contre la lumière bleue phototoxique. En effet, le paramètre $\Delta_{angulaire}$ est d'autant plus élevé que :

(i) la valeur de la réflectivité $R_{\theta'}(435\ nm)$ est faible, c'est-à-dire que la quantité de lumière bleue phototoxique venant de l'arrière du porteur et réfléchie par la lentille ophtalmique en direction de la rétine du porteur est faible, et que
(ii) la valeur de la réflectivité $R_\theta(435\ nm)$ est élevée, c'est-à-dire que la quantité de lumière bleue phototoxique arrivant de manière directe sur la face principale avant de la lentille ophtalmique et réfléchie par celle-ci est élevée.

Ainsi, la quantité totale de lumière bleue phototoxique parvenant jusqu'à la rétine du porteur est diminuée et celle-ci est préservée des risques nocifs de la lumière bleue photo-toxique.

Dans un mode de réalisation préféré, le paramètre $\Delta_{angulaire}$ de la lentille ophtalmique munie d'un filtre large selon l'invention est supérieur ou égal à 0,7, mieux supérieur ou égal à 0,75, et mieux encore supérieur ou égal à 0,8.

De préférence, le paramètre $\Delta_{angulaire}$ est déterminé pour un angle d'incidence $\theta$ sensiblement égal à 15° et un angle d'incidence $\theta'$ sensiblement égal à 45°.

Selon l'invention, le filtre formé sur la face principale avant de la lentille ophtalmique comprend une ou plusieurs couches.

Une couche du filtre est définie comme ayant une épaisseur déposée supérieure ou égale à 1 nm. Ainsi, toute couche ayant une épaisseur inférieure à 1 nm ne sera pas comptabilisée dans le nombre de couches du filtre. Une éventuelle sous-couche disposée entre le filtre et le substrat n'est pas non plus comptabilisée dans le nombre de couches du filtre interférentiel.

Sauf indication contraire, toutes les épaisseurs de couches divulguées dans la présente demande sont des épaisseurs physiques, et non des épaisseurs optiques.

Dans un mode de réalisation préféré, chaque couche du filtre présente une épaisseur individuelle inférieure ou égale à 200 nanomètres.

La limitation de l'épaisseur individuelle de chacune des couches du filtre selon l'invention permet d'assurer de bonnes propriétés mécaniques à chacune des couches comme l'adhésion des couches les unes sur les autres ou la résistance aux craquelures. De plus, dans cette gamme d'épaisseur, les tolérances de fabrication sont moins contraignantes et il est plus facile de déposer une telle couche dont l'épaisseur est homogène sur toute la surface de la lentille ophtalmique.

Dans un mode de réalisation préféré de l'invention, chaque couche du filtre présente une épaisseur individuelle inférieure ou égale à 150 nanomètres, mieux inférieure ou égale à 120 nm.

Dans d'autres modes de réalisation préférés de l'invention, le filtre que comporte la lentille est un filtre interférentiel. On entendra par là que le filtre comprend au moins une couche formée sur l'une des faces principales de la lentille ophtalmique munie du filtre interférentiel, cette couche présentant un indice de réfraction différent d'au moins 0,1 unité de l'indice de réfraction du substrat. Les propriétés optiques d'un tel filtre, comme par exemple la réflectivité, résultent des interférences provenant des réflexions multiples aux interfaces air / couche et substrat / couche.

Lorsque le filtre interférentiel de l'invention comprend au moins deux couches, il comprend alors un empilement d'au moins une couche de haut indice de réfraction, ou « couche haut indice » désignée couche HI, et d'au moins une couche de bas indice de réfraction, ou « couche bas indice » désignée couche BI.

Dans la présente demande, une couche du filtre interférentiel est dite couche de haut indice de réfraction » lorsque son indice de réfraction est supérieur à 1,60, de préférence supérieur ou égal à 1,65, de préférence encore supérieur ou égal à 1,70, mieux supérieur ou égal à 1,80 et encore mieux supérieur ou égal à 1,90. De même, une couche du filtre interférentiel est dite couche de bas indice de réfraction lorsque son indice de réfraction est inférieur à 1,50, de préférence inférieur ou égal à 1,48, mieux inférieur ou égal à 1,47.

Sauf indication contraire, les indices de réfraction auxquels il est fait référence dans la présente demande sont exprimés à une température de 25°C et pour une longueur d'onde de référence égale à 550 nm.

Dans un mode de réalisation préféré, le filtre interférentiel comporte moins de 11 couches, de préférence un nombre de couches allant de 2 à 10 couches, mieux de 4 à 9 couches, de façon optimale de 4 à 7 couches. Il n'est pas nécessaire que les couches HI et BI soient alternées dans l'empilement du filtre interférentiel, bien qu'elles puissent l'être selon un mode de réalisation de l'invention. Deux couches HI (ou plus) peuvent être déposées l'une sur l'autre, tout comme deux couches BI (ou plus) peuvent être déposées l'une sur l'autre.

Dans les modes de réalisation particuliers de l'invention où le filtre est un filtre interférentiel comprenant 8 ou 9 couches, l'épaisseur totale de l'empilement est de préférence comprise entre 450 nm et 600 nm.

Dans les modes de réalisation particuliers de l'invention où le filtre est un filtre interférentiel comprenant 6 ou 7 couches, l'épaisseur totale de l'empilement est de préférence inférieure à 500 nm, mieux elle est comprise entre 300 nm et 500 nm.

Dans les modes de réalisation particuliers de l'invention où le filtre est un filtre interférentiel comprenant 4 ou 5 couches, l'épaisseur totale de l'empilement est de préférence inférieure à 300 nm, mieux elle est comprise entre 200 nm et 300 nm.

Une couche HI est une couche de haut indice de réfraction classique, bien connue dans la technique. Elle comprend généralement un ou plusieurs oxydes minéraux tels que, sans limitation : la zircone ($ZrO_2$), l'oxyde de titane ($TiO_2$), l'alumine ($Al_2O_3$), le pentoxyde de tantale ($Ta_2O_5$), l'oxyde de néodyme ($Nd_2O_5$), l'oxyde de praséodyme ($Pr_2O_3$), le titanate de praséodyme ($PrTiO_3$), l'oxyde de lanthane ($La_2O_3$), le pentoxyde de niobium ($Nb_2O_5$), ou l'oxyde d'yttrium ($Y_2O_3$). Éventuellement, les couches HI peuvent contenir également de la silice ou d'autres matériaux de bas indice de réfraction, pourvu que leur indice de réfraction soit supérieur à 1,60 comme indiqué ci-dessus. Les matériaux préférés sont $TiO_2$, $PrTiO_3$, $ZrO_2$, $Al_2O_3$, $Y_2O_3$ et leurs mélanges.

Une couche BI est également une couche de bas indice de réfraction classique bien connue et peut comprendre, sans limitation : de la silice ($SiO_2$), ou bien un mélange de silice et d'alumine, en particulier de la silice dopée avec de l'alumine, cette dernière contribuant à augmenter la résistance thermique du filtre interférentiel. La couche BI est de préférence une couche comprenant au moins 80% en masse de silice, mieux au moins 90 % en masse de silice, par rapport à la masse totale de la couche BI, et encore mieux consiste en une couche de silice.

Éventuellement, les couches bas indice peuvent contenir également des matériaux de haut indice de réfraction, pourvu que l'indice de réfraction de la couche résultante soit inférieur à 1,50.

Lorsqu'une couche BI comprenant un mélange de $SiO_2$ et d'$Al_2O_3$ est utilisée, elle comprend préférentiellement de 1 à 10%, mieux de 1 à 8% et encore mieux de 1 à 5% en masse d'$Al_2O_3$ par rapport à la masse totale de silice et d'alumine dans cette couche.

Par exemple, des couches de $SiO_2$ dopée avec 4% ou moins d'$Al_2O_3$ en masse, ou une couche de $SiO_2$ dopée avec 8% d'$Al_2O_3$ peuvent être employées. Des mélanges $SiO_2$/$Al_2O_3$ disponibles dans le commerce peuvent être utilisés, tels que le LIMA® commercialisé par UMICORE MATERIALS AG (indice de réfraction compris entre 1,48 et 1,50), ou la substance L5® commercialisée par MERCK KGaA (indice de réfraction égale à 1,48 pour une longueur d'onde de 500 nm).

La couche externe du filtre interférentiel est généralement une couche bas indice, typiquement à base de silice, comprenant de préférence au moins 80% en masse de silice, mieux au moins 90% en masse de silice (par exemple une couche de silice dopée avec de l'alumine), par rapport à la masse totale de cette couche externe, et encore mieux consiste en une couche externe de silice.

Généralement, les couches HI ont une épaisseur physique variant de 10 nm à 100 nm, mieux inférieure ou égale à 80 nm, et encore mieux inférieure ou égale à 70 nm, et les couches BI ont une épaisseur physique variant de 10 nm à 150 nm, mieux inférieure ou égale à 135 nm, et encore mieux inférieure ou égale à 120 nm.

La lentille ophtalmique de l'invention peut également être rendue antistatique, c'est-à-dire ne pas retenir et/ou développer une charge électrostatique appréciable, grâce à l'incorporation d'au moins une couche électriquement conductrice dans le filtre.

De préférence, il s'agit d'une couche supplémentaire d'un oxyde conducteur tel que l'oxyde d'indium, l'oxyde d'étain, l'ITO (Indium Tin Oxide). Cette couche présente une épaisseur généralement inférieure à 20 nm, préférentiellement entre 5 nm et 15 nm.

Elle est préférentiellement adjacente à une couche de haut indice telle qu'une couche d'oxyde de zirconium.

Préférentiellement, cette couche conductrice est disposée sous la dernière couche bas indice du filtre (c'est-à-dire la couche la plus proche de l'air), généralement à base de silice.

Selon un mode de réalisation de l'invention, le filtre est déposé sur une sous-couche. Il est considéré ici que cette sous-couche du filtre ne fait pas partie du filtre.

Par sous-couche du filtre, ou couche d'adhésion, on entend un revêtement d'épaisseur relativement importante, utilisé dans le but d'améliorer les propriétés mécaniques telles que la résistance à l'abrasion et/ou à la rayure du filtre et/ou de promouvoir son adhésion au substrat ou au revêtement sous-jacent.

Compte tenu de son épaisseur relativement importante, la sous-couche ne participe généralement pas à l'activité optique de filtrage du filtre, en particulier dans le cas où elle possède un indice de réfraction proche de celui du revêtement sous-jacent (qui est généralement le revêtement anti-abrasion et/ou anti-rayures) ou de celui du substrat de la lentille ophtalmique, lorsque la sous-couche est directement déposée sur le substrat de la lentille ophtalmique.

La sous-couche doit avoir une épaisseur suffisante pour promouvoir la résistance à l'abrasion du filtre, mais de préférence pas trop importante pour ne pas provoquer une absorption lumineuse qui, selon la nature de la sous-couche, pourrait réduire significativement le facteur de transmission visuelle $T_v$ tel que défini dans la norme ISO 13666 :1998, et mesuré conformément à la norme ISO 8980-3.

L'épaisseur de cette sous-couche est généralement inférieure à 300 nm, mieux inférieur à 200 nm, et est généralement supérieure à 90 nm, mieux supérieure à 100 nm.

La sous-couche comprend de préférence une couche à base de $SiO_2$, comprenant de préférence au moins 80% en masse de silice, mieux au moins 90% en masse de silice, par rapport à la masse totale de la sous-couche, et encore mieux consiste en une sous-couche de silice. L'épaisseur de cette sous-couche à base de silice est généralement inférieure à 300 nm, mieux inférieure à 200 nm, et est généralement supérieure à 90 nm, mieux supérieure à 100 nm.

Selon un autre mode de réalisation, cette sous-couche à base de $SiO_2$ est une sous-couche de silice dopée avec de l'alumine, dans des proportions telles que définies ci-dessus, de préférence consiste en une couche de silice dopée avec de l'alumine.

Selon un mode de réalisation particulier, la sous-couche consiste en une couche de $SiO_2$.

Il est préférable d'utiliser une sous-couche de type monocouche. Toutefois, la sous-couche peut être laminée (multicouches), en particulier lorsque la sous-couche et le revêtement sous-jacent (ou le substrat, si la sous-couche est déposée directement sur le substrat) présentent une différence d'indice de réfraction non négligeable. C'est notamment le cas lorsque le revêtement sous-jacent, qui est généralement un revêtement anti-abrasion et/ou anti-rayure, ou le substrat, possèdent un indice de réfraction élevé, terme par lequel on entend un indice de réfraction supérieur ou égal à 1,55, de préférence supérieur ou égal à 1,57.

Dans ce cas, la sous-couche peut comporter, outre une couche d'épaisseur comprise entre 90 nm et 300 nm, dite couche principale, de préférence au plus trois autres couches, mieux au plus deux autres couches, intercalées entre le substrat éventuellement revêtu et cette couche d'épaisseur comprise entre 90 nm et 300 nm, qui est généralement une couche à base de silice. Ces couches additionnelles sont de préférence de fines couches, dont la fonction est de limiter les réflexions multiples à l'interface sous-couche / revêtement sous-jacent ou à l'interface sous-couche / substrat, selon le cas.

Une sous-couche multicouche comprend préférentiellement, outre la couche principale, une couche d'indice de réfraction élevé et d'épaisseur inférieure ou égale à 80 nm, mieux inférieure ou égale à 50 nm et mieux encore inférieure ou égale à 30 nm. Cette couche d'indice de réfraction élevé est directement en contact avec le substrat d'indice de réfraction élevé ou le revêtement sous-jacent d'indice de réfraction élevé, selon le cas. Bien entendu, ce mode de réalisation peut être utilisé même si le substrat (ou le revêtement sous-jacent) possède un indice de réfraction inférieur à 1,55.

En alternative, la sous-couche comprend, outre la couche principale et la couche d'indice de réfraction élevé précitée, une couche de matériau d'indice de réfraction inférieur ou égal à 1,55, de préférence inférieur ou égal à 1,52, mieux inférieur ou égal à 1,50 à base de $SiO_2$ (c'est-à-dire comprenant de préférence au moins 80% en masse de silice) d'épaisseur inférieure ou égale à 80 nm, mieux inférieure ou égale à 50 nm et mieux encore inférieure ou égale à 30 nm, sur laquelle est déposée ladite couche d'indice de réfraction élevé. Typiquement, dans ce cas, la sous-couche comprend, déposées dans cet ordre sur le substrat éventuellement revêtu, une couche de 25 nm de $SiO_2$, une couche de 10 nm de $ZrO_2$ ou de $Ta_2O_5$ et la couche principale de la sous-couche.

Le filtre et l'éventuelle sous-couche sont préférentiellement déposées par dépôt sous vide selon l'une des techniques suivantes : i) par évaporation, éventuellement assistée par faisceau ionique ; ii) par pulvérisation par faisceau d'ions ; iii) par pulvérisation cathodique ; iv) par dépôt chimique en phase vapeur assisté par plasma. Ces différentes techniques sont décrites dans les ouvrages "Thin Film Processes" et "Thin Film Processes II" (Vossen & Kern Éditeurs, Academic Press, 1978 et 1991 respectivement). Une technique particulièrement recommandée est la technique d'évaporation sous vide.

De préférence, lorsque le filtre est un filtre interférentiel, le dépôt de chacune des couches de l'empilement du filtre et de l'éventuelle sous-couche est réalisé par évaporation sous vide.

Dans un mode de réalisation particulier de l'invention, la lentille ophtalmique présente un facteur moyen de réflexion lumineux $R_v$ sur la face principale avant de la lentille ophtalmique qui est inférieur ou égal à 2,5%.

De préférence, ce facteur moyen de réflexion lumineux $R_v$ est inférieur ou égal à 2%, mieux encore inférieur ou égal à 1,5%.

Dans un mode particulièrement préféré, le facteur moyen de réflexion lumineux $R_v$ est inférieur ou égal à 0,7%, mieux inférieur ou égal à 0,6%.

Dans un mode de réalisation préféré, la lentille ophtalmique présente un facteur moyen de réflexion lumineux $R_v$ sur chacune des faces principales de la lentille ophtalmique qui est inférieur ou égal à 2,5%. Mieux, ce facteur moyen de réflexion lumineux $R_v$ et en particulier sur la face principale arrière de la lentille, est inférieur ou égal à 1%, mieux inférieur ou égal à 0,7%.

Selon un mode de réalisation préféré de l'invention, la face principale arrière est revêtue d'un revêtement antireflet conventionnel ou bien de préférence d'un revêtement antireflet efficace dans l'UV, c'est-à-dire réfléchissant peu la lumière ultraviolette, tel que ceux décrits par exemple dans le document PCT/EP2011/072386.

Ceci permet de protéger l'oeil d'un porteur contre la lumière UV provenant de l'arrière du porteur, incidente sur la face principale arrière de la lentille, et pouvant être réfléchie par cette face principale arrière en direction de l'oeil du porteur.

Le facteur moyen de réflexion dans l'UV $R_{UV}$ sur la face principale arrière de la lentille ophtalmique, pour des longueurs d'onde comprises entre 280 nm et 380 nm, pondéré par la fonction $W(\lambda)$ définie dans la norme ISO 13666:1998, est inférieur ou égal à 7%, mieux inférieur ou égal à 6%, et mieux encore inférieur ou égal à 5%, pour un angle d'incidence de 30° et pour un angle d'incidence de 45°. Le facteur moyen de réflexion dans l'UV $R_{UV}$ est défini par la relation :

$$R_{UV} = \frac{\int_{280}^{380} W(\lambda).R(\lambda).d\lambda}{\int_{280}^{380} W(\lambda).d\lambda}$$

où $R(\lambda)$ désigne le réflectivité spectrale sur la face principale arrière de la lentille ophtalmique à la longueur d'onde considérée, et $W(\lambda)$ désigne une fonction de pondération égale au produit de l'éclairement énergétique spectral solaire $Es(\lambda)$ par la fonction spectrale relative d'efficacité $S(\lambda)$.

La fonction spectrale $W(\lambda)$, qui permet de calculer les facteurs de transmission des rayonnements UV est définie dans la norme ISO 13666:1998.

Le revêtement antireflet efficace dans l'UV comprend de préférence un empilement d'au moins une couche de haut indice de réfraction et d'au moins une couche de bas indice de réfraction.

Le filtre selon l'invention peut être déposé directement sur un substrat photochromique nu. Dans certaines applications, il est préférable que la face principale de la lentille ophtalmique comportant le filtre soit revêtue d'un ou plusieurs revêtements fonctionnels préalablement à la formation du filtre sur cette face principale. Ces revêtements fonctionnels, classiquement utilisés en optique, peuvent être, sans limitation : une couche de primaire anti-choc, un revêtement anti-abrasion et/ou anti-rayures, un revêtement polariseur, un revêtement coloré.

Généralement, la face principale avant et/ou arrière du substrat photochromique est revêtue d'une couche de primaire anti-choc, d'un revêtement anti-abrasion et/ou anti-rayures.

Le filtre est de préférence déposé sur un revêtement anti-abrasion et/ou anti-rayures. Le revêtement anti-abrasion et/ou anti-rayures peut être toute couche classiquement utilisée comme revêtement anti-abrasion et/ou anti-rayure dans le domaine des lentilles ophtalmiques. De tels revêtements sont décrits, entre autres, dans le document EP 0614957.

La lentille ophtalmique selon l'invention peut également comporter des revêtements formés sur le filtre et capables de modifier ses propriétés de surface, tels que des revêtements hydrophobes et/ou oléophobes (*« top coat »* anti-salissure) et/ou des revêtements anti-buée. De tels revêtements sont décrits, entre autres, dans le document US 7678464. Ces revêtements sont de préférence déposés sur la couche externe du filtre. Leur épaisseur est en général inférieure ou égale à 10 nm, de préférence de 1 nm à 10 nm, mieux de 1 nm à 5 nm.

Typiquement, une lentille ophtalmique photochromique selon l'invention comprend un substrat successivement revêtu sur sa face principale avant d'une couche de primaire anti-choc, d'une couche anti-abrasion et/ou anti-rayures, d'un filtre selon l'invention, et d'un revêtement hydrophobe et/ou oléophobe.

La lentille ophtalmique photochromique selon l'invention est de préférence une lentille ophtalmique pour lunettes, ou une ébauche de lentille ophtalmique photochromique. L'invention concerne ainsi également une paire de lunettes photochromiques comportant au moins une telle lentille ophtalmique photochromique.

La lentille ophtalmique photochromique peut être une lentille polarisée, ou une lentille solaire, teintée, avec ou sans correction.

La face principale arrière du substrat de la lentille ophtalmique photochromique peut être revêtue successivement d'une couche de primaire anti-choc, d'une couche anti-abrasion et/ou anti-rayures, d'un revêtement anti-reflet qui peut être, ou non, un revêtement antireflet anti-UV, et d'un revêtement hydrophobe et/ou oléophobe.

La lentille ophtalmique photochromique selon l'invention est particulièrement avantageuse pour protéger de la photo-toxicité de la lumière bleue l'oeil d'un porteur souffrant d'une détérioration d'un oeil, en particulier due à un processus dégénératif tel que la dégénérescence maculaire liée à l'âge.

Une lentille ophtalmique photochromique telle que décrite ci-dessus présente également l'avantage de conférer un meilleur contraste visuel au porteur.

La plupart des filtres décrits précédemment et utilisés dans une lentille ophtalmique selon l'invention comprenant un substrat photochromique trouve également une application particulièrement avantageuse lorsque ces filtres sont formés sur l'une des faces principales d'une lentille ophtalmique comprenant un substrat transparent.

Parmi ces filtres, un filtre selon l'invention est tel qu'il confère à la face principale d'une lentille ophtalmique comprenant un substrat transparent lorsqu'il est appliqué sur ladite face, la propriété selon laquelle le facteur moyen de réflexion dans l'UVA $R_{m,UVA}$ sur une gamme de longueurs d'onde allant de 330 nanomètres à 380 nanomètres est inférieur à 31%, de préférence inférieur ou égal à 30%, pour un angle d'incidence compris entre 0° et 15°.

Dans un mode de réalisation préféré, chaque couche dudit filtre présente une épaisseur individuelle inférieure ou égale à 200 nanomètres.

Dans un autre mode de réalisation préféré, le filtre selon l'invention est tel que la largeur à mi-hauteur FWHM de la courbe de réflectivité spectrale de la face principale sur laquelle le filtre est déposé est supérieure ou égale à 76 nm et inférieure ou égale à 150 nm.

Dans un autre mode de réalisation préféré, le filtre selon l'invention est tel que le facteur moyen de réflexion lumineux $R_v$ sur la face principale du substrat transparent qui comprend le filtre est inférieur ou égal à 2,5%, mieux inférieur ou égal à 1,5%, et mieux encore inférieur ou égal à 1%.

Dans un autre mode de réalisation de l'invention, les deux faces principales avant et arrière comportent chacune un filtre selon l'invention. Les deux filtres ainsi formés, l'un sur la face principale avant et l'autre sur la face principale arrière, peuvent alors être identiques ou différents.

Les exemples suivants illustrent l'invention de façon plus détaillée mais non limitative.

EXEMPLES

### 1. Procédures générales et modes opératoires

Les filtres selon l'invention sont déposés sur des verres photochromiques ORMA® Transitions® VI gris revêtus d'un revêtement anti-abrasion (revêtement décrit dans l'exemple 3 du brevet EP614957).

Le dispositif d'évaporation et les conditions de dépôt des couches de $SiO_2$ et de $ZrO_2$ (vitesse d'évaporation, pression) sont telles que décrites dans la demande de brevet WO 2008107325.

### 2. Calcul des courbes :

Les courbes de réflectivité spectrales des filtres selon l'invention ont été modélisées à partir du logiciel *Essential Mac Leod* (version 9.4) de Thin Film Center.

Les caractéristiques des filtres et leurs propriétés figurent au point 3 ci-dessous.

Les lentilles ophtalmiques photochromiques équipées des filtres des exemples 1 à 3 ont effectivement été réalisées et les courbes de réflectivité spectrales mesurées.

### 3. Empilements des filtres et propriétés. Courbes de réflectivité spectrale. Résultats

Les caractéristiques structurelles et les performances optiques des lentilles ophtalmiques photochromique obtenues selon les exemples 1 à 3 sont détaillées ci-dessous (voir tableau 1 ci-dessous).

Les courbes de réflectivité spectrale à un angle d'incidence sur la face principale avant de 15° et pour des longueurs d'onde allant de 280 nm à 780 nm des exemples 1 à 2 ci-dessous sont représentées sur les figures 1 et 2. Sont également représentées sur ces figures, les courbes de réflectivité spectrale des exemples comparatifs C1 et C2 (voir ci-dessous).

Les valeurs des facteurs moyens de réflexion sont celles de la face principale avant. Les facteurs $R_{m,UVA}$, $R_{m,B}$, $R_{m,400nm-450nm}$, et $R_v$ sont indiqués pour un angle d'incidence de 15°(ces différentes valeurs sont des moyennes non pondérées sur la gamme de longueurs d'onde correspondante).

On constate que les lentilles ophtalmiques photochromiques selon l'invention possèdent de très bonnes propriétés de réflexion de la lumière bleue phototoxique ($R_{m,B} > 10\%$), sans que cela ne nuise aux performances anti-reflet dans le domaine visible ($R_v < 2,5\%$ pour un angle d'incidence de 15°).

Les lentilles ophtalmiques photochromiques obtenues selon les exemples 1 à 3 présentent en outre d'excellentes propriétés de transparence et une bonne neutralité colorimétrique, une bonne résistance à l'abrasion et aux rayures, et une bonne résistance à un traitement au trempé dans l'eau chaude suivi d'une sollicitation mécanique de surface. L'adhérence des revêtements au substrat est également très satisfaisante.

**Tableau 1**

| Exemple 1 | | Exemple 2 | | Exemple 3 | |
|---|---|---|---|---|---|
| **Substrat + hard coat** | | **Substrat + hard coat** | | **Substrat + hard coat** | |
| **ZrO2** | 35 nm | **ZrO2** | 43 nm | **ZrO2** | 35 nm |
| **SiO2** | 46 nm | **SiO2** | 47 nm | **SiO2** | 30 nm |
| **ZrO2** | 70 nm | **ZrO2** | 62 nm | **ZrO2** | 73 nm |
| **SiO2** | 13 nm | **SiO2** | 19 nm | **ITO** | 7 nm |
| **ZrO2** | 88 nm | **ZrO2** | 95 nm | **SiO2** | 106 nm |
| **ITO** | 7 nm | **ITO** | 7 nm | **Air** | |
| **SiO2** | 111 nm | **SiO2** | 114 nm | | |
| **Air** | | **Air** | | | |
| **Épaisseur totale** | 370 nm | **Épaisseur totale** | 387 nm | **Épaisseur totale** | 251 nm |
| **$R_{m,UVA}$ @ 15° (330 - 380 nm)** | 14,2% | **$R_{m,UVA}$ @ 15° (330 - 380 nm)** | 15,6% | **$R_{m,UVA}$ @ 15° (330 - 380 nm)** | 24,9% |
| **$R_{m,B}$ @ 15° (420 - 450nm)** | 22,3% | **$R_{m,B}$ @ 15° (420 - 450nm)** | 29,7% | **$R_{m,B}$ @ 15° (420 - 450nm)** | 11,0% |
| **Max. Réflectivité** | 395 nm | **Max. Réflectivité** | 407 nm | **Max. Réflectivité** | 365 nm |
| **Largeur à mi-hauteur (FWHM)** | 80 nm | **Largeur à mi-hauteur (FWHM)** | 82 nm | **Largeur à mi-hauteur (FWHM)** | 90 nm |
| **$\Delta_{spectral}$ @ 15° (435 nm vs. 480 nm)** | 0,90 | **$\Delta_{spectral}$ @ 15° (435 nm vs. 480 nm)** | 0,80 | **$\Delta_{spectral}$ @ 15° (435 nm vs. 480 nm)** | 0,85 |
| **$\Delta_{angulaire}$ @ 435 nm ($\theta$=15° vs.$\theta$'=45°)** | 0,72 | **$\Delta_{angulaire}$ @ 435 nm ($\theta$=15°,$\theta$'=45°)** | 0,61 | **$\Delta_{angulaire}$ @ 435 nm ($\theta$=15,$\theta$'=45°)** | 0,72 |
| **Rm @ 15° (465 - 495 nm)** | 3,2% | **Rm @ 15° (465 - 495 nm)** | 7,2% | **Rm @ 15° (465 - 495 nm)** | 2,0% |
| **Rv @ 15° (380 - 780 nm)** | 1,6% | **Rv @ 15° (380 - 780 nm)** | 1,9% | **Rv @ 15° (380 - 780 nm)** | 0,7% |
| **$R_{m,400-450nm}$ @ 15° (400 - 450 nm)** | 27,0% | **$R_{m,400-450nm}$ @ 15° (400 - 450 nm)** | 33,0% | **$R_{m,400-450nm}$ @ 15° (400 - 450 nm)** | 13,8% |

Exemples comparatifs C1, C2, et C3

Les caractéristiques structurelles et les performances optiques des lentilles ophtalmiques des exemples comparatifs C1 et C2 sont détaillées ci-dessous (voir tableau 2 ci-dessous).

**Tableau 2**

| Exemple C1 | | Exemple C2 | |
|---|---|---|---|
| | | | |
| **Substrat + hard coat** | | **Substrat + hard coat** | |
| **ZrO2** | 20 nm | **ZrO2** | 43 nm |
| **SiO2** | 75 nm | **SiO2** | 45 nm |
| **ZrO2** | 50 nm | **ZrO2** | 68 nm |
| **SiO2** | 35 nm | **SiO2** | 32 nm |
| **ZrO2** | 68 nm | **ZrO2** | 66 nm |
| **SiO2** | 117 nm | **SiO2** | 124 nm |
| **Air** | | **Air** | |
| | | | |
| **Épaisseur totale** | 365 nm | **Épaisseur totale** | 378 nm |
| $R_{m,UVA}$ **@ 15° (330 - 380 nm)** | 49,0% | $R_{m,UVA}$ **@ 15° (330 - 380 nm)** | 44,0% |
| $R_{m,B}$ **@ 15° (420 - 450nm)** | 20,3% | $R_{m,B}$ **@ 15° (420 - 450nm)** | 30,8% |
| **Max. Réflectivité** | 367 nm | **Max. Réflectivité** | 379 nm |
| **Largeur à mihauteur (FWHM)** | 97 nm | **Largeur à mihauteur (FWHM)** | 103 nm |
| $\triangle_{spectral}$ **@ 15° (435 nm vs. 480 nm)** | 0,94 | $\triangle_{spectral}$ **@ 15° (435 nm vs. 480 nm)** | 0,92 |
| $\triangle_{angulaire}$ **@ 435 nm ($\theta$=15° vs.$\theta$'=45°)** | 0,83 | $\triangle_{angulaire}$ **@ 435 nm ($\theta$=15°,$\theta$'=45°)** | 0,75 |
| **Rm @ 15° (465 - 495 nm)** | 1,6% | **Rm @ 15° (465 - 495 nm)** | 3,3% |
| **Rv @ 15° (380 - 780 nm)** | 0,84% | **Rv @ 15° (380 - 780 nm)** | 1,87% |
| $R_{m,400-450nm}$ **@ 15° (400 - 450 nm)** | 27,0% | $R_{m,400-450nm}$ **@ 15° (400 - 450 nm)** | 38,0% |

Les filtres des exemples comparatifs C1 et C2 sont des filtres larges du type de ceux décrits dans la demande de brevet non encore publiée de la demanderesse et déposée sous le numéro FR 12 54529.

L'exemple comparatif C3 est une lentille ophtalmique photochromique Orma® Transitions® VI gris commerciale de la société ESSILOR revêtue d'un traitement antireflet Crizal®Alizé.

Par ailleurs, on comprendra à la lumière des résultats figurant dans le tableau 3 ci-dessous l'efficacité d'une lentille ophtalmique photochromique selon l'invention (voir exemple 3) par rapport à la lentille de l'exemple comparatif C2 et par rapport à une lentille ophtalmique photochromique du marché comme celle de l'exemple comparatif C3.

On a mesuré l'évolution en fonction du temps (ici à l'échelle des minutes) du facteur de transmission visuelle $T_v$ exprimé en % lorsqu'une lentille ophtalmique est illuminée dans des conditions standards de mesure définies dans la norme ISO 8980-3.

Ces mesures ont été réalisées au moyen d'un banc photochromique conforme aux exigences de la norme ISO 8980-3.

Le banc photochromique comprend un simulateur solaire composé de deux lampes Xénon de la marque Oriel d'une puissance de 150 Watts dont les spectres sont combinés pour illuminer la lentille ophtalmique placée dans une chambre régulée à une température de 23°C +/- 2°C.

La transmission spectrale du verre est mesurée de façon continue au moyen d'un spectromètre à barrettes de photodiodes et acquisition rapide de type MCS501.

Les mesures ont pour but de vérifier le comportement de lentilles ophtalmiques comprenant un substrat photochromique, et notamment d'évaluer le niveau de transmission visuelle $T_v$ [15min] (en %) atteint au bout d'un temps d'illumination de 15 minutes.

Ceci permet alors d'évaluer, conformément à la norme ISO 8980-3, la « classe » de la lentille ophtalmique.

Selon cette norme, une lentille ophtalmique comprenant un substrat photochromique présentant une valeur $T_v$ [15min] inférieure à 18 $\pm$ 2 % est considérée comme une lentille ophtalmique de classe 3.

Si la valeur de $T_v$ [15min] est supérieure à 18 $\pm$ 2 %, la lentille ophtalmique ne correspond qu'à une classe 2.

Les résultats figurent dans le tableau 3 ci-dessous.

**Tableau 3**

| Lentille | R$_{m,UVA}$ @ 15° | R$_{m,400nm-450nm}$ | Coupure du bleu | Tv [15min] | Préservation des performances photochromiques | Classe |
|---|---|---|---|---|---|---|
| **Exemple 3** | 24,9% | 13,8% | ○ | 18,5% | ○ | 3 |
| **Exemple comparatif C2** | 44,0% | 38,0% | ○ | 25,0% | X | 2 |
| **Exemple comparatif C3** | 15% | | X | 17,4% | - | 3 |

Dans ce tableau 3, la colonne « Coupure du bleu » permet de caractériser les différents exemples de lentille du tableau 3 par rapport à leur efficacité vis-à-vis de la filtration de la lumière bleue photo-toxique.

Ainsi, un symbole « ○ » dans une ligne de cette colonne signifie que la lentille de la ligne correspondante est efficace pour rejeter la lumière bleue photo-toxique. *A contrario*, un symbole « X » dans une ligne de cette colonne signifie que la lentille de la ligne correspondante est inefficace pour rejeter la lumière bleue photo-toxique.

Par ailleurs, dans ce même tableau 3, la colonne « Préservation des performances photochromiques » permet de caractériser les différents exemples de lentille du tableau 3 par rapport à la chute (en valeur absolue) de transmission visuelle Tv [15min] en comparaison avec une lentille ophtalmique photochromique standard revêtue d'un traitement antireflet Crizal®Alizé, qui correspond donc à l'exemple comparatif C3.

Ainsi, un symbole « O » dans une ligne de cette colonne signifie que la lentille de la ligne correspondante présente une chute (en valeur absolue) de transmission visuelle Tv [15min] inférieure à 5% par rapport à l'exemple comparatif C3. *A contrario*, un symbole « X » dans une ligne de cette colonne signifie que la lentille de la ligne correspondante présente une chute (en valeur absolue) de transmission visuelle Tv [15min] supérieure à 5% par rapport à l'exemple comparatif C3. Le symbole « - » dans la ligne correspondant à l'exemple comparatif C3 signifie que la comparaison est sans objet.

La lentille de l'exemple 3 selon l'invention permet d'atteindre une valeur de T$_v$ [15min] correspondant à une lentille teintée de classe 3. Par ailleurs, les mesures effectuées ont montré que la cinétique de coloration / décoloration n'est pas affectée par la présence du filtre selon l'invention. Les profils des courbes de coloration / décoloration sont identiques à ceux d'une lentille ophtalmique photochromique classique telle que l'exemple comparatif C3.

La lentille de l'exemple comparatif C2 présente une valeur de T$_v$ [15min] de 25%, ce qui représente une augmentation de plus de 7% en valeur de transmission visuelle.

Cette lentille ne correspond qu'à une classe 2.

Il est remarquable que les lentilles ophtalmiques photochromiques selon l'invention présentent d'excellentes propriétés photochromiques en particulier en valeur de T$_v$ [15min] tout en permettant une filtration efficace de la lumière bleue dans la zone phototoxique et une bonne sélectivité spectrale, les lentilles ophtalmiques selon l'invention filtrant très peu la lumière bleue correspondant à la zone chronobiologique. Ceci résulte de l'utilisation combinée d'un filtre large impliquant l'existence d'un maxima de réflexion décalé par rapport à la zone de filtration souhaitée (420-450 nm) et relativement élevé dans le proche UV et l'UVA mais dont la valeur de R$_{m,UVA}$ a été intentionnellement limitée, ainsi que préférentiellement la valeur moyenne de réflexion dans la zone 400-450 nm.

Ainsi, les lentilles ophtalmiques photochromiques selon l'invention permettent de rejeter la lumière bleue photo-toxique tout en garantissant de bonnes performances photochromiques et en maintenant un niveau de lumière bleue chronobiologique élevé.

**Revendications**

**1.** Lentille ophtalmique photochromique présentant une face principale avant et une face principale arrière, et comportant :

(i) un substrat photochromique, et
(ii) un filtre comprenant une ou plusieurs couches formées sur ladite face principale avant de la lentille ophtalmique,

ledit filtre présentant une épaisseur totale inférieure ou égale à 700 nm et conférant à ladite face principale avant les propriétés suivantes :

- un facteur moyen de réflexion dans l'UVA ($R_{m,UVA}$) sur une gamme de longueurs d'onde allant de 330 nanomètres à 380 nanomètres qui est inférieur ou égal à 40 %, mieux inférieur ou égal à 35%, pour un angle d'incidence compris entre 0° et 15°,
- un facteur moyen de réflexion dans le bleu ($R_{m,B}$) sur une gamme de longueurs d'onde allant de 420 nanomètres à 450 nanomètres qui est supérieur ou égal à 5%, pour un angle d'incidence compris entre 0° et 15°,
- une courbe de réflectivité spectrale pour un angle d'incidence compris entre 0° et 15°, cette courbe de réflectivité ayant :

- un maximum de réflectivité à une longueur d'onde inférieure à 435 nanomètres, et
- une largeur à mi-hauteur (FWHM) supérieure ou égale à 70 nanomètres, et

- pour un angle d'incidence compris entre 0° et 15°, un paramètre $\Delta_{spectral}$ défini par la relation $\Delta_{spectral} = 1 - [R_{0°-15°}(480\,nm) / R_{0°-15°}(435\,nm)]$, tel que ce paramètre $\Delta_{spectral}$ soit supérieur ou égal à 0,8, où

- $R_{0°-15°}(480\,nm)$ représente la valeur de la réflectivité de la face principale avant à la longueur d'onde de 480 nanomètres à l'incidence considérée, et
- $R_{0°-15°}(435\,nm)$ représente la valeur de la réflectivité de la face principale avant à la longueur d'onde de 435 nanomètres à l'incidence considérée.

2. Lentille ophtalmique photochromique selon la revendication 1, dans laquelle le filtre présente une épaisseur totale inférieure ou égale à 600 nanomètres, de préférence inférieure ou égale à 500 nanomètres.

3. Lentille ophtalmique photochromique selon l'une des revendications 1 et 2, dans laquelle le facteur moyen de réflexion dans l'UVA ($R_{m,UVA}$) est supérieur ou égale à 5 %, mieux supérieur ou égal à 10 %, et mieux encore supérieur ou égal à 12 %.

4. Lentille ophtalmique photochromique selon l'une des revendications 1 à 3, dans laquelle le filtre est un filtre interférentiel comportant un nombre de couches inférieur ou égal à onze, préférentiellement de deux à dix couches, et encore plus préférentiellement de quatre à neuf couches.

5. Lentille ophtalmique photochromique selon l'une des revendications 1 à 4, dans laquelle chaque couche du filtre présente une épaisseur individuelle inférieure ou égale à 200 nanomètres.

6. Lentille ophtalmique photochromique selon l'une des revendications 1 à 5, dans laquelle le facteur moyen de réflexion dans le bleu ($R_{m,B}$) est supérieur ou égale à 10%, mieux supérieur ou égal à 20 %, et mieux encore supérieur ou égal à 30 %.

7. Lentille ophtalmique photochromique selon l'une des revendications 1 à 6, dans laquelle le maximum de réflectivité est à une longueur d'onde inférieure ou égale à 410 nm, mieux inférieure ou égale à 400 nm, et encore mieux inférieure ou égale à 390 nm.

8. Lentille ophtalmique photochromique selon l'une des revendications 1 à 7, dans laquelle la largeur à mi-hauteur (FWHM) est supérieure ou égale à 75 nanomètres, mieux supérieure ou égale à 80 nanomètres.

9. Lentille ophtalmique photochromique selon l'une des revendications 1 à 8, dans laquelle la largeur à mi-hauteur est inférieure ou égale à 150 nanomètres, de préférence inférieure ou égale à 120 nanomètres, mieux inférieure ou égale à 110 nm.

10. Lentille ophtalmique photochromique selon l'une des revendications 1 à 9, dans laquelle le facteur moyen de réflexion lumineux ($R_v$) sur la face principale avant est inférieur ou égal à 2,5%, mieux inférieur ou égal à 1,5%, et mieux encore inférieur ou égal à 1%.

11. Lentille ophtalmique photochromique selon l'une des revendications 1 à 11, dans laquelle le filtre confère à la face principale avant la propriété supplémentaire suivante :

- pour un angle d'incidence $\theta$ compris entre 0° et 15° et pour un angle d'incidence $\theta'$ compris entre 30° et 45°, un paramètre $\Delta_{angulaire}$ défini par la relation $\Delta_{angulaire}$ = 1 - [$R_{\theta'}$(435 nm) / $R_\theta$(435 nm)], tel que ce paramètre $\Delta_{angulaire}$ soit supérieur ou égal à 0,6, où :

    - $R_\theta$(435 nm) représente la valeur de la réflectivité de la face principale comportant ledit filtre à la longueur d'onde de 435 nanomètres pour l'angle d'incidence $\theta$, et
    - $R_{\theta'}$(435 nm) représente la valeur de la réflectivité de la face principale comportant ledit filtre à la longueur d'onde de 435 nanomètres pour l'angle d'incidence $\theta'$.

**12.** Lentille ophtalmique selon l'une des revendications 1 à 11, dans laquelle ledit filtre confère à ladite face principale avant la propriété supplémentaire suivante :

    - un facteur moyen de réflexion entre 400 nanomètres et 450 nanomètres ($R_{m,400nm-450nm}$) sur une gamme de longueurs d'onde allant de 400 nanomètres à 450 nanomètres qui est inférieur ou égal à 35 %, pour un angle d'incidence compris entre 0° et 15°.

**13.** Lentille ophtalmique photochromique selon l'une des revendications 1 à 12, dans laquelle le substrat photochromique comprend un substrat transparent revêtu de composés photochromiques.

**14.** Filtre formé d'une ou plusieurs couches, **caractérisé en ce que** ledit filtre présente une épaisseur inférieure ou égale à 700 nanomètres, et **en ce que** ledit filtre, lorsqu'il est appliqué sur l'une des faces principales d'un substrat transparent, confère à ladite face principale du substrat transparent les propriétés suivantes :

    - un facteur moyen de réflexion dans l'UVA ($R_{m,UVA}$) sur une gamme de longueurs d'onde allant de 330 nanomètres à 380 nanomètres qui est inférieur à 31%, de préférence inférieur ou égal à 30 %, mieux inférieur ou égal à 25% pour un angle d'incidence compris entre 0° et 15°, de préférence pour un angle d'incidence égal à 15°,
    - un facteur moyen de réflexion dans le bleu ($R_{m,B}$) sur une gamme de longueurs d'onde allant de 420 nanomètres à 450 nanomètres qui est supérieur ou égal à 5%, pour un angle d'incidence compris entre 0° et 15°,
    - une courbe de réflectivité spectrale pour un angle d'incidence compris entre 0° et 15°, cette courbe de réflectivité ayant :

        - un maximum de réflectivité à une longueur d'onde inférieure à 435 nanomètres, et
        - une largeur à mi-hauteur (FWHM) supérieure ou égale à 70 nanomètres, et

    - pour un angle d'incidence compris entre 0° et 15°, un paramètre $\Delta_{spectral}$ défini par la relation $\Delta_{spectral}$ = 1 - [$R_{0°-15°}$(480 nm) / $R_{0°-15°}$(435 nm)], tel que ce paramètre $\Delta_{spectral}$ soit supérieur ou égal à 0,8, où

        - $R_{0°-15°}$(480 nm) représente la valeur de la réflectivité de la face principale avant à la longueur d'onde de 480 nanomètres à l'incidence considérée, et
        - $R_{0°-15°}$(435 nm) représente la valeur de la réflectivité de la face principale avant à la longueur d'onde de 435 nanomètres à l'incidence considérée.

**15.** Filtre selon la revendication 14, dans lequel chaque couche dudit filtre présente une épaisseur individuelle inférieure ou égale à 200 nanomètres.

**16.** Filtre selon l'une des revendications 14 et 15, dans lequel la largeur à mi-hauteur est supérieure ou égale à 76 nm et inférieure ou égale à 150 nm.

**17.** Filtre selon l'une des revendications 14 à 16, dans lequel le facteur moyen de réflexion lumineux ($R_v$) sur la face principale dudit substrat transparent qui comprend le filtre est inférieur ou égal à 2,5%, mieux inférieur ou égal à 1,5%, et mieux encore inférieur ou égal à 0,7%.

**18.** Paire de lunettes comportant au moins une lentille ophtalmique photochromique selon l'une des revendications 1 à 13 ou au moins un filtre selon l'une des revendications 14 à 17.

**Patentansprüche**

1. Photochrome ophthalmische Linse, die eine vordere Hauptseite und eine hintere Hauptseite aufweist und Folgendes umfasst:

   (i) ein photochromes Substrat und
   (ii) einen Filter, der eine oder mehrere Schichten umfasst, die auf der vorderen Hauptseite der ophthalmischen Linse ausgebildet sind,

   wobei der Filter eine Gesamtdicke aufweist, die niedriger als oder gleich 700 nm ist und der vorderen Hauptseite die folgenden Eigenschaften verleiht:

   - einen mittleren Reflexionsfaktor im UVA-Bereich ($R_{m,UVA}$) in einem Wellenlängenbereich von 330 Nanometer bis 380 Nanometer, der kleiner oder gleich 40 %, besser kleiner oder gleich 35 % ist, für einen Einfallwinkel zwischen 0° und 15°,
   - einen mittleren Reflexionsfaktor im Blaubereich ($R_{m,B}$) in einem Wellenlängenbereich von 420 Nanometer bis 450 Nanometer, der größer oder gleich 5 % ist, für einen Einfallwinkel zwischen 0° und 15°,
   - eine Kurve einer spektralen Reflektivität für einen Einfallwinkel zwischen 0° und 15°, wobei diese Reflektivitätskurve Folgendes aufweist:

     - ein Reflektivitätsmaximum bei einer Wellenlänge unter 435 Nanometer, und
     - eine Halbwertsbreite (FWHM) größer oder gleich 70 Nanometer, und
     - für einen Einfallwinkel zwischen 0° und 15° einen Parameter $\Delta_{spektral}$, der von dem Verhältnis $\Delta_{spektral} = 1 - [R_{0°-15°}(480\ nm) / R_{0°-15°}(435\ nm)]$ definiert wird, so dass dieser Parameter $\Delta_{spektral}$ größer oder gleich 0,8 ist, wobei
     - $R_{0°-15°}(480\ nm)$ den Wert der Reflektivität der vorderen Hauptseite bei der Wellenlänge von 480 Nanometer beim betrachteten Einfall repräsentiert und
     - $R_{0°-15°}(435\ nm)$ den Wert der Reflektivität der vorderen Hauptseite bei der Wellenlänge von 435 Nanometer beim betrachteten Einfall repräsentiert.

2. Photochrome ophthalmische Linse nach Anspruch 1, wobei der Filter eine Gesamtdicke kleiner oder gleich 600 Nanometer, vorzugsweise kleiner order gleich 500 Nanometer aufweist.

3. Photochrome ophthalmische Linse nach einem der Ansprüche 1 und 2, wobei der mittlere Reflexionsfaktor im UVA-Bereich ($R_{m,UVA}$) größer oder gleich 5 %, besser größer oder gleich 10 % und besser noch größer oder gleich 12 % ist.

4. Photochrome ophthalmische Linse nach einem der Ansprüche 1 bis 3, wobei der Filter ein Interferenzfilter ist, der eine Anzahl von Schichten kleiner oder gleich elf, vorzugsweise von zwei bis zehn Schichten und noch bevorzugter von vier bis neun Schichten umfasst.

5. Photochrome ophthalmische Linse nach einem der Ansprüche 1 bis 4, wobei jede Schicht des Filters eine einzelne Dicke aufweist, die kleiner oder gleich 200 Nanometer ist.

6. Photochrome ophthalmische Linse nach einem der Ansprüche 1 bis 5, wobei der mittlere Reflexionsfaktor im Blaubereich ($R_{m,B}$) größer oder gleich 10 %, besser größer oder gleich 20 % und besser noch größer oder gleich 30 % ist.

7. Photochrome ophthalmische Linse nach einem der Ansprüche 1 bis 6, wobei das Reflektivitätsmaximum bei einer Wellenlänge kleiner oder gleich 410 nm, besser kleiner oder gleich 400 nm und besser noch kleiner oder gleich 390 nm liegt.

8. Photochrome ophthalmische Linse nach einem der Ansprüche 1 bis 7, wobei die Halbwertsbreite (FWHM) kleiner oder gleich 75 Nanometer, besser größer oder gleich 80 Nanometer ist.

9. Photochrome ophthalmische Linse nach einem der Ansprüche 1 bis 8, wobei die Halbwertsbreite kleiner oder gleich 150 Nanometer, vorzugsweise kleiner oder gleich 120 Nanometer, besser kleiner order gleich 110 nm ist.

10. Photochrome ophthalmische Linse nach einem der Ansprüche 1 bis 9, wobei der mittlere Lichtreflexionsfaktor ($R_v$) auf der vorderen Hauptseite kleiner oder gleich 2,5 %, besser kleiner oder gleich 1,5 % und besser noch kleiner oder gleich 1 % ist.

11. Photochrome ophthalmische Linse nach einem der Ansprüche 1 bis 11, wobei der Filter der vorderen Hauptseite die folgende zusätzliche Eigenschaft verleiht:

- für einen Einfallwinkel $\theta$ zwischen 0° und 15° und für einen Einfallwinkel $\theta$' zwischen 30° und 45° einen Parameter $\Delta_{angulär}$, der von dem Verhältnis $\Delta_{angulär} = 1 - [R_{\theta'}(435\ nm) / R_{\theta}(435\ nm)]$ definiert wird, so dass dieser Parameter $\Delta_{angulär}$ größer oder gleich 0,6 ist, wobei:

- $R_{\theta}(435\ nm)$ den Wert der Reflektivität der Hauptseite repräsentiert, die den Filter mit der Wellenlänge von 435 Nanometer für den Einfallwinkel $\theta$ umfasst, und
- $R_{\theta'}(435\ nm)$ den Wert der Reflektivität der Hauptseite repräsentiert, die den Filter mit der Wellenlänge von 435 Nanometer für den Einfallwinkel $\theta$' umfasst.

12. Photochrome ophthalmische Linse nach einem der Ansprüche 1 bis 11, wobei der Filter der vorderen Hauptseite die folgende zusätzliche Eigenschaft verleiht:

- einen mittleren Reflexionsfaktor zwischen 400 Nanometer und 450 Nanometer ($R_{m,400nm-450nm}$) in einem Wellenlängenbereich von 400 Nanometer bis 450 Nanometer, der kleiner oder gleich 35 % ist, für einen Einfallwinkel zwischen 0° und 15°.

13. Photochrome ophthalmische Linse nach einem der Ansprüche 1 bis 12, wobei das photochrome Substrat ein transparentes Substrat umfasst, das mit photochromen Verbindungen beschichtet ist.

14. Filter, der von einer oder mehreren Schichten gebildet ist, **dadurch gekennzeichnet, dass** der Filter eine Dicke aufweist, die kleiner oder gleich 700 Nanometer ist, und dadurch, dass der Filter, wenn er auf eine der Hauptseiten eines transparenten Substrats aufgetragen ist, der Hauptseite des transparenten Substrats die folgenden Eigenschaften verleiht:

- einen mittleren Reflexionsfaktor im UVA-Bereich ($R_{m,UVA}$) in einem Wellenlängenbereich von 330 Nanometer bis 380 Nanometer, der kleiner 31 %, vorzugsweise kleiner oder gleich 30 %, besser kleiner oder gleich 25 % ist, für einen Einfallwinkel zwischen 0° und 15°, vorzugsweise für einen Einfallwinkel gleich 15°,
- einen mittleren Reflexionsfaktor im Blaubereich ($R_{m,B}$) in einem Wellenlängenbereich von 420 Nanometer bis 450 Nanometer, der größer oder gleich 5 % ist, für einen Einfallwinkel zwischen 0° und 15°,
- eine Kurve einer spektralen Reflektivität für einen Einfallwinkel zwischen 0° und 15°, wobei diese Reflektivitätskurve Folgendes aufweist :

- ein Reflektivitätsmaximum bei einer Wellenlänge unter 435 Nanometer, und
- eine Halbwertsbreite (FWHM) größer oder gleich 70 Nanometer, und
- für einen Einfallwinkel zwischen 0° und 15° einen Parameter $\Delta_{spektral}$, der von dem Verhältnis $\Delta_{spektral} = 1 - [R_{0°-15°}(480\ nm) / R_{0°-15°}(435\ nm)]$ definiert wird, so dass dieser Parameter $\Delta_{spektral}$ größer oder gleich 0,8 ist, wobei
- $R_{0°-15°}(480\ nm)$ den Wert der Reflektivität der vorderen Hauptseite bei der Wellenlänge von 480 Nanometer beim betrachteten Einfall repräsentiert und
- $R_{0°-15°}(435\ nm)$ den Wert der Reflektivität der vorderen Hauptseite bei der Wellenlänge von 435 Nanometer beim betrachteten Einfall repräsentiert.

15. Filter nach Anspruch 14, wobei jede Schicht des Filters eine einzelne Dicke aufweist, die kleiner oder gleich 200 Nanometer ist.

16. Filter nach einem der Ansprüche 14 und 15, wobei die Halbwertsbreite größer oder gleich 76 nm und kleiner oder gleich 150 nm ist.

17. Filter nach einem der Ansprüche 14 bis 16, wobei der mittlere Lichtreflexionsfaktor ($R_v$) auf der Hauptseite des transparenten Substrats, die den Filter umfasst, kleiner oder gleich 2,5 %, besser kleiner oder gleich 1,5 % und besser noch kleiner oder gleich 0,7 % ist.

18. Brille umfassend mindestens eine photochrome ophthalmische Linse nach einem der Ansprüche 1 bis 13 oder mindestens einen Filter nach einem der Ansprüche 14 bis 17.

**Claims**

1. A photochromic ophthalmic lens having a front main face and a back main face, and comprising:

    (i) a photochromic substrate; and
    (ii) a filter including one or more layers formed on said front main face of the ophthalmic lens,

    said filter having a total thickness smaller than or equal to 700 nm and conferring on said front main face the following properties:

    - an average reflection factor in the UVA ($R_{m,UVA}$) over a range of wavelengths extending from 330 nanometers to 380 nanometers that is lower than or equal to 40% and better still lower than or equal to 35%, for an angle of incidence comprised between 0° and 15°;
    - an average reflection factor in the blue ($R_{m,B}$) over a range of wavelengths extending from 420 nanometers to 450 nanometers that is higher than or equal to 5%, for an angle of incidence comprised between 0° and 15°; and
    - a spectral reflectivity curve for an angle of incidence comprised between 0° and 15°, this reflectivity curve having:

        - a maximum reflectivity at a wavelength shorter than 435 nanometers; and
        - a full width at half-maximum (FWHM) larger than or equal to 70 nanometers; and

    - for an angle of incidence comprised between 0° and 15°, a parameter $\Delta_{spectral}$ defined by the relationship $\Delta_{spectral} = 1 - [R_{0°-15°}(480 \text{ nm}) / R_{0°-15°}(435 \text{ nm})]$, such that this parameter $\Delta_{spectral}$ is higher than or equal to 0.8; where

        - $R_{0°-15°}(480 \text{ nm})$ represents the value of the reflectivity of the front main face at the wavelength of 480 nanometers at the incidence in question; and
        - $R_{0°-15°}(435 \text{ nm})$ represents the value of the reflectivity of the front main face at the wavelength of 435 nanometers at the incidence in question.

2. The photochromic ophthalmic lens as claimed in claim 1, in which the filter has a total thickness smaller than or equal to 600 nanometers and preferably smaller than or equal to 500 nanometers.

3. The photochromic ophthalmic lens as claimed in one of claims 1 and 2, in which the average reflection factor in the UVA ($R_{m,UVA}$) is higher than or equal to 5%, better still higher than or equal to 10%, and even better still higher than or equal to 12%.

4. The photochromic ophthalmic lens as claimed in one of claims 1 to 3, in which the filter is an interference filter comprising a number of layers smaller than or equal to 11, preferably from two to ten layers, and even more preferably from four to nine layers.

5. The photochromic ophthalmic lens as claimed in one of claims 1 to 4, in which each layer of the filter has an individual thickness smaller than or equal to 200 nanometers.

6. The photochromic ophthalmic lens as claimed in one of claims 1 to 5, in which the average reflection factor in the blue ($R_{m,B}$) is higher than or equal to 10%, better still higher than or equal to 20%, and even better still higher than or equal to 30%.

7. The photochromic ophthalmic lens as claimed in one of claims 1 to 6, in which the maximum reflectivity is at a wavelength shorter than or equal to 410 nm, better still shorter than or equal to 400 nm, and even better still shorter than or equal to 390 nm.

8. The photochromic ophthalmic lens as claimed in one of claims 1 to 7, in which the full width at half-maximum (FWHM) is larger than or equal to 75 nanometers and better still larger than or equal to 80 nanometers.

9. The photochromic ophthalmic lens as claimed in one of claims 1 to 8, in which the full width at half-maximum is smaller than or equal to 150 nanometers, preferably smaller than or equal to 120 nanometers and better still smaller than or equal to 110 nm.

10. The photochromic ophthalmic lens as claimed in one of claims 1 to 9, in which the average light reflection factor ($R_v$) from the front main face is lower than or equal to 2.5%, better still lower than or equal to 1.5%, and even better still lower than or equal to 1%.

11. The photochromic ophthalmic lens as claimed in one of claims 1 to 11, in which the filter confers on the front main face the following additional property:

- for an angle of incidence $\theta$ comprised between 0° and 15° and for an angle of incidence $\theta'$ comprised between 30° and 45°, a parameter $\Delta_{angular}$ defined by the relationship $\Delta_{angular} = 1 - [ R_{\theta'}(435 \text{ nm}) / R_{\theta}(435 \text{ nm})]$, such that this parameter $\Delta_{angular}$ is higher than or equal to 0.6; where

  - $R_{\theta}(435 \text{ nm})$ represents the value of the reflectivity of the main face comprising said filter at the wavelength of 435 nanometers for the angle of incidence $\theta$; and
  - $R_{\theta'}(435 \text{ nm})$ represents the value of the reflectivity of the main face comprising said filter at the wavelength of 435 nanometers for the angle of incidence $\theta'$.

12. The ophthalmic lens as claimed in one of claims 1 to 11, in which said filter confers on said front main face the following additional property:

- an average reflection factor between 400 nanometers and 450 nanometers ($R_{m,400nm-450nm}$) over a range of wavelengths extending from 400 nanometers to 450 nanometers that is lower than or equal to 35%, for an angle of incidence comprised between 0° and 15°.

13. The photochromic ophthalmic lens as claimed in one of claims 1 to 12, in which the photochromic substrate comprises a transparent substrate coated with photochromic compounds.

14. A filter formed from one or more layers, **characterized in that** said filter has a thickness smaller than or equal to 700 nanometers, and **in that** said filter, when it is applied to one of the main faces of a transparent substrate, confers on said main face of the transparent substrate the following properties:

- an average reflection factor in the UVA ($R_{m,UVA}$) over a range of wavelengths extending from 330 nanometers to 380 nanometers that is lower than 31%, preferably lower than or equal to 30% and better still lower than or equal to 25% for an angle of incidence comprised between 0° and 15°, and preferably for an angle of incidence equal to 15°;
- an average reflection factor in the blue ($R_{m,B}$) over a range of wavelengths extending from 420 nanometers to 450 nanometers that is higher than or equal to 5%, for an angle of incidence comprised between 0° and 15°; and
- a spectral reflectivity curve for an angle of incidence comprised between 0° and 15°, this reflectivity curve having:

  - a maximum reflectivity at a wavelength shorter than 435 nanometers; and
  - a full width at half-maximum (FWHM) larger than or equal to 70 nanometers; and

- for an angle of incidence comprised between 0° and 15°, a parameter $\Delta_{spectral}$ defined by the relationship $\Delta_{spectral} = 1 - [R_{0°-15°}(480 \text{ nm}) / R_{0°-15°}(435 \text{ nm})]$, such that this parameter $\Delta_{spectral}$ is higher than or equal to 0.8; where

  - $R_{0°-15°}(480 \text{ nm})$ represents the value of the reflectivity of the front main face at the wavelength of 480 nanometers at the incidence in question; and
  - $R_{0°-15°}(435 \text{ nm})$ represents the value of the reflectivity of the front main face at the wavelength of 435 nanometers at the incidence in question.

15. The filter as claimed in claim 14, in which each layer of said filter has an individual thickness smaller than or equal to 200 nanometers.

16. The filter as claimed in one of claims 14 and 15, in which the full width at half-maximum is larger than or equal to 76 nm and smaller than or equal to 150 nm.

**17.** The filter as claimed in one of claims 14 to 16, in which the average light reflection factor ($R_v$) from the main face of said transparent substrate that includes the filter is lower than or equal to 2.5%, better still lower than or equal to 1.5%, and even better still lower than or equal to 0.7%.

**18.** A pair of spectacles comprising at least one photochromic ophthalmic lens as claimed in one of claims 1 to 13 or at least one filter as claimed in one of claims 14 to 17.

Fig. 1

Fig. 2

## RÉFÉRENCES CITÉES DANS LA DESCRIPTION

**Documents brevets cités dans la description**

- WO 2008024414 A
- US 20110075096 A1
- WO 2010111499 A1
- US 20040233524 A1
- EP 614957 A
- EP 1268567 A
- EP 1161512 A
- US 4286957 A
- US 4880667 A
- EP 2011072386 W
- EP 0614957 A
- US 7678464 B
- WO 2008107325 A
- FR 1254529

**Littérature non-brevet citée dans la description**

- **KITCHEL E.** The effects of blue light on ocular health. *Journal of Visual Impairment and Blindness,* 2000, vol. 94 (6
- **GLAZER-HOCKSTEIN et al.** *Retina,* 2006, vol. 26 (1), 1-4
- **ALGVERE P.V. et al.** Age-Related Maculopathy and the Impact of the Blue Light Hazard. *Acta Ophthalmo. Scand.,* 2006, vol. 84, 4-15
- **TOMANY S.C. et al.** Sunlight and the 10-Year Incidence of Age-Related Maculopathy. The Beaver Dam Eye Study. *Arch Ophthalmol.,* 2004, vol. 122, 750-757
- Thin Film Processes'' et ''Thin Film Processes II. Academic Press, 1978